# EUROPÄISCHE PATENTSCHRIFT

(11) **EP 0 755 616 B1**
(45) Veröffentlichungstag und Bekanntmachung des Hinweises auf die Patenterteilung: **26.06.2002**
(21) Anmeldenummer: 95917300.6
(22) Anmeldetag: 07.04.1995
(51) Int. Cl.: H04Q 11/00, H04B 10/207

(54) **TRANSPORTNETZ MIT HOHER ÜBERTRAGUNGSKAPAZITÄT FÜR DIE TELEKOMMUNIKATION**
TRANSPORT NETWORK WITH HIGH TRANSMISSION CAPACITY FOR TELECOMMUNICATIONS
RESEAU DE TRANSPORT A HAUT POUVOIR DE TRANSMISSION POUR TELECOMMUNICATIONS

(30) Priorität: 15.04.1994 DE 4412920; 23.09.1994 DE 4433960
(43) Veröffentlichungstag der Anmeldung: 29.01.1997
(73) Patentinhaber: Nokia Corporation, 02150 Espoo (FI)
(72) Erfinder: JÄGER, Hubert, Anton, D-88239 Wangen (DE); KAO, Ming, Seng, Taiwan (CN)
(74) Vertreter: Lutz, Johannes Dieter, Dr.
(86) Internationale Anmeldenummer: EP9501284
(87) Internationale Veröffentlichungsnummer: WO9528815

(56) Entgegenhaltungen:
- IEEE TRANSACTIONS ON COMPUTERS, Bd.41, Nr.10, Oktober 1990, NEW YORK US Seiten 1223 - 1241, XP328601 P.W. DOWD 'Wavelength Division Multiple Access Channel Hypercube Processor Interconnection'
- PROCEEDINGS, THE 11TH ANNUAL JOINT CONFERENCE OF THE IEEE COMPUTER AND COMMUNICATIONS SOCIETIES, INFOCOM '92, 4-8 MAI 1992, BAND 3 SEITEN 2134-2143, FLORENCE IT, XP300341 B. LI ET AL 'Virtual Topologies for WDM Star LANs - The Regular Structures Approach'
- CONFERENCE RECORD, IEEE GLOBAL TELECOMMUNICATIONS COFERENCE, 2-5 DEZ. 1990, BAND 1 SEITEN 34-40, SAN DIEGO US, XP218579 J-F. P LABOURDETTE ET AL 'Partially Reconfigurable Multihop Lightwave Networks'
- PROCEEDINGS, 11TH INTERNATIONAL CONFERENCE ON COMPUTER COMMUNICATION, 28 SEPT.-2 OKT. 1992, SEITEN 529-535 GENOVA IT M. AJMONE MARSAN ET AL 'All-Optical Manhattan Networks with Quadrant Routing'
- ELECTRONICS LETTERS, Bd.23, Nr.18, 27. August 1987, STEVENAGE GB Seiten 974 - 976 H. KOBRINSKI 'Crossconnection of Wavelength Division-Multiplexed High-Speed Channels' in der Anmeldung erwähnt

## Beschreibung

Die Erfindung betrifft ein Transportnetz mit hoher Übertragungskapazität für die Telekommunikation, bei dem Knoten des Netzes über optische Glasfaserstrecken transparent derart miteinander verbunden sind, daß funktionell eine Vollvermaschung der Knoten gegeben ist, die ein gleichzeitiges Ansprechen sämtlicher Knoten durch jeden weiteren Knoten des Netzes ermöglicht.

Ein derartiges Netz ist in Form eines vollvermaschten Wellenlängen-Multiplex-Stern-Netzes (WDM Cross-Connect) bekannt [H. Kobrinski, "Crossconnection of Wavelength-Division-Multiplexed High Speed Channels," IEE Electr. Lett., vol.23, pp.975-977, Aug.27, 1987].

Bei diesem bekannten Netz ist jeder Knoten von jedem anderen Knoten aus über einen zentralen Knoten ansprechbar. Die Nachteile dieser Netzkonfiguration sind die folgenden: Bei Ausfall einer der Übertragungsleitungen zwischen den einzelnen Knoten und dem Zentralknoten ist für diesen Knoten vollständig die Kommunikation mit anderen Netzknoten unterbrochen. Es können von diesem Knoten aus weder Datenströme von den anderen Netzknoten mehr empfangen werden, noch Datenströme zu den anderen Netzknoten gesendet werden. Bei Ausfall des Zentralknotens ist keinerlei Kommunikation zwischen den einzelnen Netzknoten mehr möglich. Des weiteren kann ein großes Mißverhältnis zwischen den euklidischen Abständen eines Knotens zu den zu diesem Knoten benachbarten Knoten und den Übertragungsstreckenlängen entlang der optischen Faserverbindung über den Zentralknoten zu diesen Knoten existieren.

Mit im wesentlichen denselben Nachteilen behaftet ist auch das durch die wissenschaftliche Veröffentlichung "Virtual Topologies for WDM Star LANs - The Regular Structures Approach," Proc. IEEE INFOCOM'92, pp. 2134-2143, 1992. von B. Li and A. Ganz bekannte auf einer Sterntopologie basierende Kommunikationsnetz, bei dem von der Möglichkeit eines Mehrfachzugriffs auf die Übertragungskapazität des Netzes von dem Wellenlängen-Multiplex-Verfahren gebrauch gemacht wird, wobei Sender- und Empfänger-Strukturen verwendet werden, die auf fest vorgegebene Wellenlängen ausgelegt sind, und bei dem eine reguläre Ordnung der Verbindungen, die im allgemeinen Fall nicht zu einer Vollvermaschung führen, vorgesehen ist.

Aus der wissenschaftlichen Publikation "Wavelength Division Multiple Access Channel Hypercube Processor Interconnection," IEEE Transaction on Computers, vol. 41, no. 10, October 1992 von P.W. Dowd ist ein ebenfalls als "Netz" bezeichnungsfähiges Kommunikationssystem bekannt, durch das mehrere Prozessoren für eine gleichzeitige Benutzung miteinander kommunikationsfähig verbunden sind. Bei diesem Netz sind Knoten desselben entlang der Achsen einer sogenannten Hypercube Topologie angeordnet, wobei jeweils in Sterntopologie die Knoten einer Zeile bzw. einer Spalte miteinander vermascht sind. Der Mehrfachzugriff erfolgt wieder mittels des Wellenlängen-Multiplex- sowie des Zeit-Multiplex-Verfahrens.

Ein Telekommunikationsnetz mit einem der bekannten Struktur vergleichbaren Aufbau wäre mit einer erheblichen Verschlechterung bezüglich des Verhältnisses der euklisischen Distanz und der Pfadlänge zwischen je zwei Knoten des Netzes behaftet.

Von dem erläuterten Stand der Technik ausgehend, ist es daher Aufgabe der Erfindung, ein funktionell voll vermaschtes Telekommunikationsnetz der eingangs genannten Art dahingehend zu verbessern, daß seine Empfindlichkeit gegen Ausfall einzelner Knoten wesentlich reduziert ist und die drastischen Mißverhältnisse zwischen euklidischer Distanz und faseroptischer Übertragungsstrecke wesentlich günstiger werden.

Diese Aufgabe wird erfindungsgemäß durch die kennzeichnenden Merkmale des Patentanspruchs 1 gelöst.

Durch die hiernach vorgesehene Netzkonfiguration werden zumindest die folgenden funktionellen Eigenschaften und Vorteile erzielt:

Die erfindungsgemäße Netzkonfiguration in Matrixtopologie verbindet jeden Knoten des Netzes mit seinen mindestens zwei Nachbarn und ermöglicht so bei Ausfall einer der die Knoten verbindenden Glasfaserkabelverbindungen die Datenströme über die verbleibenden Verbindungen umzuleiten. Für statische oder näherungsweise statische und gleichverteilte Datenverkehrsaufkommen stellt eine Vollvermaschung die größte nutzbare Übertragungskapazität zur Verfügung, da hierbei keine Übertragungskapazität für Funktionen eines Protokolls bereitgestellt werden muß, das die Verteilung der gesamten Übertragungskapazität des Netzes an die einzelnen Knoten regeln würde. Die funktionelle Vollvermaschung dieses Netzes mit Matrixtopologie wird erreicht durch die Verwendung von verschiedenen optischen Fasern entlang einer Zeile zur Adressierung der Spalte eines angesprochenen Knotens und einer Signalkennung zur Adressierung der Zeile desselben angesprochenen Knotens, der Verwendung von einer der Anzahl der Netzknoten entsprechenden Zahl von Sendern und Empfängern und einer Permutation der zur Adressierung verwandten Signalkennungen entlang der Zeilen und Spalten zur Vermeidung von Kollisionen. Aufgrund der Eigenschaft, daß der Signalpfad eines Datenstromes nur entlang der Zeile des Sendeknotens und entlang der Spalte des Empfangsknotens verläuft, ist in einem Netz mit regulär matrixförmig angeordneten Knoten das Verhältnis zwischen der Länge der faseroptischen Übertragungsstrecke und der euklidischen Distanz zwischen Sende- und Empfangsknoten kleiner oder gleich der Quadratwurzel von 2.

Gemäß den kennzeichnenden Merkmalen des Patentanspruchs 2 wird ein Adressierraum, der ausschliesslich aus einer der Anzahl der Netzknoten entsprechenden Zahl von definiert verschiedenen Wellenlängen besteht, verwendet. Hieraus ergibt sich der Vorteil, daß für jeden der lediglich in der Wellenlänge spezifizierten Übertragungspfade im Netz ein Modulationsformat frei gewählt werden kann.

Gemäß den kennzeichnenden Merkmalen des Patentanspruchs 3 wird ein Adressierraum verwendet, der ausschliesslich aus einer der Anzahl der Netzknoten entsprechenden Zahl von definiert verschiedenen periodischen Zeitschlitzen besteht, zu denen die entsprechenden Sender und Empfänger empfangsbereit sind. Der Betrieb kann mit lediglich einer Wellenlänge erfolgen, bedarf aber einer Synchronisation der Sender und Zeit-Multiplexer der einzelnen Netzknoten untereinander.

Gemäß den kennzeichnenden Merkmalen des Patentanspruchs 4 wird ein Adressierraum, der sowohl aus verschiedenen Wellenlängen als auch verschiedenen in periodischer Folge wiederkehrender Zeitfenster bzw. Zeitschlitzen besteht, verwendet. Hieraus ergibt sich der Vorteil, daß für eine Zahl von Netzknoten, die zu groß ist für die Verwendung einer entsprechenden Anzahl von definiert verschiedener Wellenlängen, trotzdem ein hinreichend großer Adressierraum aufgebaut werden kann.

Der Anspruch 5 macht den Vorteil der matrixförmigen Struktur der Verknüpfung der Netzknoten untereinander geltend, der eine "Umleitung" von Datenströmen sowohl im optischen als auch im elektrischen Bereich im Schadensfalle von Teilen des Netzes ermöglicht.

Durch die kennzeichnenden Merkmale des Patentanspruchs 6 , daß die im Anspruch 5 genannten "Umgehungspfade" im elektrischen Bereich und über mehrere vom Schaden nicht erfasste Netz-Zeilen erfolgt, ergibt sich der Vorteil einer sowohl einfachen als auch flexiblen Steuerung der "Not-Umgehungspfade".

Durch die kennzeichnenden Merkmale des Patentanspruchs 7, daß die Netzknoten eine vereinheitlichte Struktur aus Wellenlängen-Multiplexern und Wellenlängen-Demultiplexern und eine programmierbare Struktur aus Wellenleitern, optischen Sendern und Empfängern aufweisen, sind diese Knotenstrukturen für die elektrooptische Integration geeignet.

Der Anspruch 8 macht mit seinem kennzeichnenden Merkmal entlang der im Knotenaufbau enthaltenen Wellenleiter optische Halbleiterverstärker (SOA) zu verwenden, von der Tatsache Gebrauch, daß entlang dieser Wellenleiter sich nur Lichtströme jeweils einer Wellenlänge ausbreiten. Die simultane Verstärkung von nur jeweils einer Wellenlänge ist erforderlich, da ein starkes sättigungsinduziertes Nebensprechen des optischen Halbleiterverstärkers keine andere Betriebsart erlaubt.

Wenn aber, wie es hier der Fall ist, sich nur Lichtströme einer Wellenlänge entlang des Wellenleiters ausbreiten, dann kann man den Vorteil des optischen Halbleiterverstärker nutzen, der eine regenerative Pulsformung der durch Dispersion verbreiterten Modulationspulse erlaubt.

Durch die kennzeichnenden Merkmale des Patentanspruchs 9, die im Falle einer Verwendung einer Kombination von Wellenlängen und Zeitschlitzen zum Aufbau des Adressraumes besagen, daß die Datenströme einer Zeile aus verschiedenen Spalten kommend und von unterschiedlichen Wellenlängen getragen lediglich über leistungsteilende Elemente zusammengeführt werden, ergibt sich der Vorteil, daß die Sende- und Empfangselemente der verschiedenen Knoten nicht untereinander synchronisiert werden müssen.

Ausgehend von einem Netz der eingangs genannten Art, das in spezieller Gestaltung den Merkmalen des Oberbegriffs des Patentanspruchs 10 entspricht, wird die, eingangs genannte, der Erfindung zu Grunde liegende, Aufgabe auch durch die kennzeichnenden Merkmale des Anspruchs 10 gelöst, gemäß denen jeder der Eckknoten (1,1; 1,m; n,1 und n,m) in Spaltenrichtung gesehen mindestens 2·(n-1) Anschlüsse und in Zeilenrichtung gesehen mindestens 2·(m-1) Anschlüsse hat, und die in den Randzeilen angeordneten Zwischenknoten (1,2;..;1,j; ..;1,(m-1) und n,2;..; n,j; ..; n,(m-1) mit j = (2; 3;..; m-1)) in Spaltenrichtung gesehen mindestens 2·(m-j)·j + 2·(m-j+1)·(j-1) Anschlüsse und die in den Randspalten angeordneten Zwischenknoten (2,1;..; i,1; ..;(n-1),1 und 2,m;..;1,j; ..; (n-1),m) mit i= (2; 3;..; n-1)) in Zeilenrichtung gesehen mindestens 2·(m-1) Anschlüsse und in Spaltenrichtung gesehen mindestens 2·(n-i)·i + 2·(n-i+1)·(i-1) Anschlüsse haben und die Innenknoten (i,j mit i= (2; 3;..; n-1) und j = (2; 3;..; m-1)) des Netzes (10) mit jedem ihrer vier Nachbarn über insgesamt mindestens 2·(m-j)·j + 2·(m-j+1)·(j-1) Anschlüsse, in Zeilenrichtung gesehen, und mit mindestens 2·(n-i)·i + 2·(n-i+1)·(i-1) Anschlüsse, in Spaltenrichtung gesehen, verbunden sind. Dadurch, daß die Zahl der Glasfasern entlang der Zeilen und Spalten zwischen zwei Knoten des Netzes 10 proportional zu der Summe der eben dort zur funktionellen Vollvermaschung benötigten Kanäle ist, kann die Kapazitätsausnutzung sämtlicher Fasern durch eine auf die Fasern gleichverteilte Belastung maximiert werden.

Durch die kennzeichnenden Merkmale des Patentanspruchs 11 wird ein Adressierraum angegeben, der aus einer Anzahl von definiert verschiedenen Wellenlängen besteht, die der größeren der Zahlen der Knoten einer Zeile m und der Knoten einer Spalte n entspricht. Hieraus ergibt sich der Vorteil, daß für jeden der lediglich in der Wellenlänge spezifizierten Übertragungspfade im Netz ein Modulationsformat frei gewählt werden kann und dennoch nur eine kleinere Zahl von Wellenlängen als Zahl an Knoten im Netz benötigt werden. Für den "quadratischen" Fall (m=n) entspricht die Zahl der benötigten definiert verschiedenen Wellenlängen lediglich der Quadratwurzel der Zahl der Knoten. Ein weiterer Vorteil resultiert daraus, daß bei jedem solchermaßen adressierbaren Knoten des Netzes mit Ausnahme der Wellenlänge mit der Bezeichnung "I" jede der max(m,n) definiert verschiedenen Wellenlängen genau m·n/max(m,n) Sendern als Emissionswellenlänge und genau m·n/max(m,n) Empfängern als Empfangswellenlänge zugeordnet ist, wodurch die Verwendung von Laserdioden- und Photodioden-Arrays möglich ist, die bevorzugt auf max(m,n) Wellenlängen betreibar sind. Die Zahl der Sender und Empfänger jedes Knotens, die der Wellenlänge "I" zugeordnet sind, beträgt nahezu m·n/max(m,n) nämlich (m·n/max(m,n)) - 1.

Gemäß den Merkmalen des Anspruchs 12 wird für jeden Knoten des erfindungsgemäßen Netzes eine für sämtliche Knoten identische Struktur verwendet, an die jene Fasern angeschlossen sind, welche Lichtströme tragen, die in die Spalte des Knotens führen, und jene Fasern angeschlossen sind, die diejenigen Lichtströme tragen, die von diesem Knoten aus zu den anderen Spalten des Neztes gerichtet sind. Alle anderen Fasern werden lediglich durchgeschleift. Hieraus ergibt sich aufgrund der Einheitlichkeit der Knotenstruktur zum einen der Vorteil, daß die Knoten in großer Stückzahl hergestellt und dadurch kostengünstig bereitgestellt werden können und zum anderen, daß die Struktur besonders für die elektrooprische Integration geeignet ist. Diese für jeden Knoten identische Struktur beinhaltet die zur Verteilung der Lichtströme verschiedener Wellenlänge, die aus der Zeile eines Knotens stammen, auf die Fasern der Spalte dieses Knotens, notwendige Struktur eines eingangs genannten "WDM-Cross-Connects". Diese Struktur des "WDM-Cross-Connects" innerhalb sämtlicher Knoten des erfindungsgemäßen Netzes stellt somit eine Grundstruktur dar, deren Erweiterung in Ausgestaltung des erfindungsgemäßen Netzes als "WDM-Gridconnect" bezeichnet werden kann.

Durch die kennzeichnenden Merkmale des Patentanspruchs 13, die besagen, daß die Kodierung der Adressierung in der Wellenlänge von jedem Knoten aus identisch ist fiir den Fall einer Anwendung der Regel, erst entlang der Zeile und dann entlang der Spalte den Signalweg zu wählen, und für den Fall einer Anwendung der Regel, erst entlang der Spalte und dann entlang der Zeile den Signalweg zu wählen ergibt sich der Vorteil, daß das erfindungsgemäße Netz, ohne Veränderung der Knotenstruktur, lediglich durch eine Vertauschung von Anschlüssen an der benutzten Knotenstruktur, in einen Zustand mit veränderten Signalpfaden geschaltet werden kann. Dadurch ist es möglich, schon erwähnte, räumlich disjunkte "Umgehungspfade" für Signale, deren Pfad durch einen Schadensfall unterbrochen wurde, im optischen Bereich für Lichtströme schalten zu können, die entlang des Pfades von ihren Sendeknoten zu ihren Empfangsknoten sowohl die Spalte als auch die Zeile des Netzes wechseln.

Das Netz ist gemäß der Merkmale des Anspruchs 14 dadurch erweiterbar, daß die Knoten der Spalten j und j+1 mit 4 zusätzlichen Fasern in Zeilenrichtung paarweise miteinander verbunden sind, wobei für geradzahliges m der Index j = (1, 3, 5, 7, .., m-3, m-1) und j = (1, 3, 5, 7, ..,m-4, m-2, m-1) für ungeradzahliges m, und die Knoten der Zeilen i und i+1 mit 4 zusätzlichen Fasern in Spaltenrichtung paarweise miteinander verbunden sind, wobei für geradzahlige n der Index i= (1, 3, 5, 7, ..,n-3, n-1) und i= (1, 3, 5, 7, ..,n-4, n-2, n-1) für ungeradzahlige n gilt. Dadurch ergibt sich der Vorteil, daß die erwähnten "Umgehungspfade" für Signale, deren im Normalbetrieb benutzter Pfad durch einen Schadensfall unterbrochen wurde, für sämtliche Lichtströme des Netzes im optischen Bereich geschaltet werden können. Dabei bilden die ergänzend hinzugekommenen Fasern eine Anordnung von Topologien in "Kammform", die räumlich disjunkte alternative "Umgehungspfade" zu den Pfaden, die lediglich innerhalb von Zeilen bzw. Spalten des Netzes verlaufen, darstellen. Dadurch, daß diese "Kammformen" in der Weise angeordnet sind, daß die "Kammarme" die kürzest mögliche Länge aufweisen, ist das Verhältnis zwischen Pfadlänge und euklidischer Distanz zwischen zwei Knoten einer Zeile oder Spalte minimal. Ein weiterer Vorteil resultiert aus der vollständigen Ausnutzung der durch die "Not-Umleitungen" frei gewordenen Kapazitäten entlang der "Kammrücken" der "Umgehungspfade" und durch die maximale Ausnutzung der zusätzlichen Fasern mit jeweils (m-1) bzw. (n-1) Lichtströmen definiert verschiedener Wellenlänge zur Adressierung von (m-1) bzw. (n-1) Knoten derselben Zeile bzw. Spalte.

Gemäß Anspruch 15 werden dem Netz in periodischer Folge Zeitschlitze zugeordnet, innerhalb derer das Netz wechselweise auf eine von zwei Signalpfad-Wahlmöglichkeiten geschaltet ist. Dadurch ergibt sich der Vorteil, daß zu jedem der Signalpfade des solchermaßen betriebenen Netzes ein alternativer Signalpfad innerhalb jedes zweiten Zeitschlitzes existiert, von dem wahlweise nur im Schadensfalle als vollständiger Ersatz, oder ständig Gebrauch gemacht werden kann. Bei Wahl der letzteren Alternative ist im räumlich begrenzten Schadensfalle lediglich eine Halbierung der benutzten Übertragungskapazität zu erwarten.

Die gemäß Anspruch 16 vorgesehene Maßnahme, daß zwei dem Anspruch 13, oder dem Anspruch 14 entsprechende Netze, mit unterschiedlichen Signalpfad-Wahlmöglichkeiten parallel betrieben werden, ergibt den Vorteil, daß ebenfalls wahlweise von einem räumlich disjunkten "Spiegelsystem" als vollem Ersatz im Schadensfalle oder von einer verdoppelten Übertragungskapazität, die sich im Schadensfalle wieder "halbiert", Gebrauch gemacht werden kann.

Das Netz ist gemäß der kennzeichnenden Merkmale des Patentanspruchs 17 dadurch erweiterbar, daß insgesamt mindestens zwei andere optische Fasern von anderen Knoten aus als denjenigen des Netzes an mindestens einem anschließbar sind. Daraus ergibt sich der Vorteil, daß eine Kommunikationsfähigkeit, d.h. eine bidirektionale Daten-Übertragungs-Möglichkeit, der Knoten des Netzes mit Knoten anderer Netze erzielt wird.

Das Netz ist. gemäß der kennzeichnenden Merkmale des Patentanspruchs 18 dadurch erweiterbar, daß die benutzten Wellenlängenmultiplexer und Wellenlängendemultiplexer mit mindestens einer Wellenlänge mehr als für eine Vollvermaschung notwendig ist, betreibbar sind, wodurch zusätzliche optisch transparente Pfade vorgesehen werden können, um eine Kommunikationsfähigkeit der Knoten des Netzes mit Knoten anderer Netze gleicher Bauart zu erzielen, wobei diese optischen Pfade nicht nur an den Randknoten des Netzes ihre jeweiligen Sende- bzw. Empfangspunkte haben. Wenn somit die Zahl der optisch transparenten Pfade zur Verknüpfung zweier Netze vergrößert wird, ergibt sich der Vorteil, daß die Zahl der Sender und Empfänger der Teilpfade, die sich die Übertragungskapazität dieser Wellenlängenpfade teilen und miteinander synchronisiert werden müssen, verkleinert wird. Die kennzeichnenden Merkmale des Patentanspruchs 18 genügen im Falle einer maximierten Ausnutzung der Übertragungskapazitäten, also im Falle einer Vollvermaschung von m x n Knoten, mit m=n, unter Verwendung von nur m definiert verschiedenen Wellenlängen, der notwendigen Bedingung, den Adressierungsraum zu vergrößern, um eine "Eindring- oder Vermaschungstiefe" der transparenten Pfad, die größer als eins ist, vorsehen zu können. "Eindringtiefe 1" soll bedeuten, daß mindestens einer der peripheren Knoten des Netzes erreicht werden kann.

Eindringtiefe "N" soll bedeuten, daß bis zu mindestens einem Knoten der N-ten Zeile oder Spalte, je nach Richtung des Eindringens gelangt werden kann.

Gemäß den Merkmalen des Anspruchs 19 werden für sämtliche Knoten (1,1 bis n,m) jeweils in beide Spalten- und Zeilenrichtungen gesehen mindestens N·(N-1) Anschlüsse vorgesehen, und die Adresse der Zeile jedes Knotens in eine von mindestens 2·N-1 definiert verschiedenen Wellenlängen kodiert und jeder Knoten unter einer von mindestens 2·N-1 definiert verschiedenen Wellenlängen für die Knoten einer Zeile ansprechbar ist, wobei N die größere der beiden Zahlen n und m ist. Hieraus ergibt sich zum einen der Vorteil, daß die Zahl der untereinander vermaschten Knoten beliebig erweitert werden kann. Des weiteren ergibt sich der Vorteil, daß eine "Eindring- oder Vermaschungstiefe" der optisch transparenten Pfade von N-1 Spalten und N-1 Zeilen in den erweiterten, sowie in den erweiternden Netzteil hinein, immer gegeben ist, und damit der weitere Vorteil, daß alle Teilnetze von NxN Knoten untereinander vollvermascht sind. Außerdem wird erreicht, daß die Ausnutzung der Übertragungskapazität der Fasern von den Knoten aus, die Pfade zu N·N-1 anderen Knoten benutzen, maximiert ist. Im Grenzfall der Vermaschung von unendlich vielen Knoten sind alle vorgesehenen Übertragungskapazitäten benutzt.

Weitere Einzelheiten der Erfindung ergeben sich aus der nachfolgenden Beschreibung spezieller Ausführungsbeispiele anhand der Zeichnungen. Es zeigen :
- Fig. 1: ein erfindungsgemäßes Telekommunikationsnetz mit insgesamt 9 Knoten, in schematisch vereinfachter Blockschaltbilddarstellung
- Fig. 2: eine Adressiertabelle zur Erläuterung der Adressierung der Knoten des Netzes gemäß Fig. 1
- Fig. 3: den prinzipiellen Aufbau eines Eckknotens des Netzes gemäß Fig. 1 aus Wellenlängen-Demultiplexern, Wellenlängen-Multiplexern, Wellenleitern, Sendern und Empfängern
- Fig. 4: den Aufbau des zentralen Knotens des Netzes gemäß Fig. 1 in einer zur Fig. 3 analogen Darstellung
- Fig. 5: einen Knoten eines zu dem Netz gemäß Fig. 1 funktionsanalogen Netzes, bei dem die Adressierung durch eine Kombination von Wellenlängen und Zeischlitzen erfolgt
- Fig. 6: ein erfindungsgemäßes Transportnetz mit maximierter Ausnutzung der Übertragungskapazität der verwendeten Fasern mit allgemein m·n Knoten in schematisch vereinfachter Blockschaltbilddarstellung
- Fig. 7: ein erfindungsgemäßes Transportnetz mit maximierter Ausnutzung der Übertragungskapazität der verwendeten Fasern mit 5 x 5, also insgesamt 25 Knoten in schematisch vereinfachter Blockschaltbilddarstellung
- Fig. 8a und 8b: eine Adressiertabelle zur Erläuterung der Adressierung der Knoten des Netzes gemäß Fig. 7
- Fig. 9: den Aufbau eines Knotens des Netzes gemäß Fig. 7 aus Wellenlängen-Demultiplexern, Wellenlängen-Multiplexem, Wellenleitern, Sendern und Empfängern
- Fig. 10a bis 10d: eine Darstellung der "Kammstrukturen" des Netzes gemäß Fig. 7, die zur Erzeugung von zu den Zeilen und Spalten des Netzes räumlich disjunkten Pfaden erforderlich sind und
- Fig. 11: den Aufbau eines Knotens des erweiterten Netzes gemäß Fig. 10 in einer zur Fig. 9 analogen Darstellung.
- Fig. 12: ein erfindungsgemäßes, in der Zahl der Knoten erweiterbares Transportnetz, mit im Grenzfall einer unendlichen Ausdehnung trotzdem maximierter Ausnutzung der Übertragungskapazität der verwendeten Fasern, in schematisch vereinfachter Blockschaltbilddarstellung.
- Fig. 13: eine Adressiertabelle zur Erläuterung der Adressierung der Knoten des Netzes gemäß Fig. 12

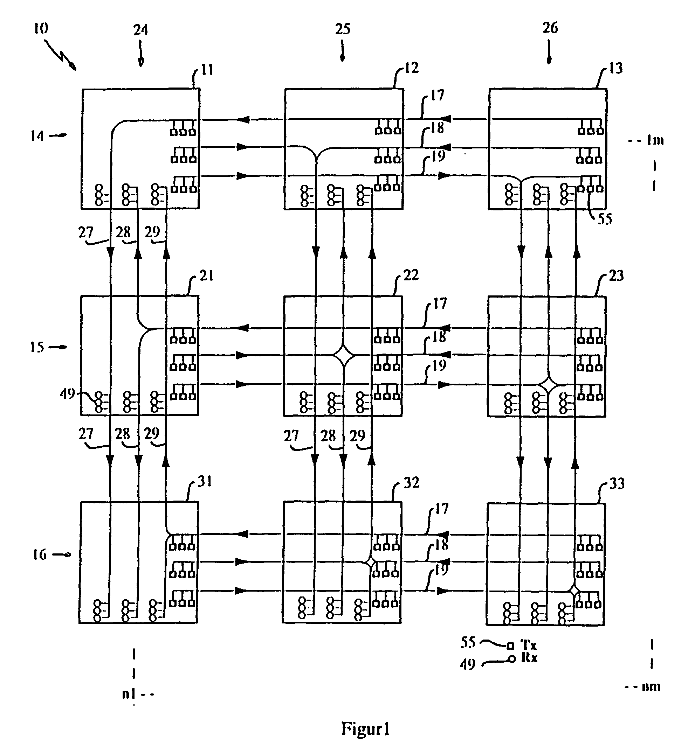

Durch das in der Fig. 1 insgesamt mit 10 bezeichnete Netz, das aus einer Anzahl von Knoten 11 bis 13, 21 bis 23 und 31 bis 33 und diese miteinander verbindenden Datenübertragungsleitungen gebildet ist, durch die die einzelnen Knoten 11 bis 13, 21 bis 23 und 31 bis 33 gleichsam eine Matrix bildend, entlang von Zeilen 14 bis 16 und Spalten 24 bis 26 miteinander verbunden sind, soll eine vollständige Vermaschung der Knoten 11 bis 13, 21 bis 23 und 31 bis 33 untereinander erzielbar sein, derart, daß gleichzeitig jeder Netzknoten jeden anderen Knoten des Netzes "ansprechen", d.h. zu diesem Daten senden kann und gleichzeitig jeder Knoten von jedem weiteren der Knoten "angesprochen" werden kann, d. h. Daten von jedem anderen der Knoten empfangen kann.

Unter "Daten" werden nachfolgend digitale modulierte Signale verstanden, die als Lichtströme über optische Fasern geleitet werden, wobei der sachliche Informationsgehalt dieser Datenströme in die Modulation der Lichtströme kodiert ist, während die Adresseninformationen in verschiedene Wellenlängen dieser Lichtströme oder zum Teil in verschiedene Wellenlängen dieser Lichtströme zu einem weiteren Teil in die zeitliche Folge von Zeitschlitzen kodiert ist, zu denen die einzelnen Knoten sendeund empfangsbereit sind oder die Adresseninformation ausschließlich in die Zuordnung von Zeitfenstern bzw. Zeitschlitzen kodiert ist, zu denen die Knoten sende- und empfangsbereit sind.

Für das zur Erläuterung gewählte Ausführungsbeispiel ist - ohne Beschränkung der Allgemeinheit - angenommen, daß das Netz insgesamt neun Knoten umfasst, die in einer "quadratischen" 3x3-Matrix angeordnet sind, und daß die Adresseninformation ausschließlich in die Wellenlängen der Lichtströme kodiert ist, die zur Übertragung der inhaltlichen Information digital moduliert sind.

Bei der dargestellten 3x3-Matrix sind die jeweils in einer Zeile 14 bis 16 angeordneten Knoten 11, 12, 13 sowie 21, 22, 23 bzw. 31, 32, 33 durch je drei optische Fasern 17 bis 19 paarweise miteinander verbunden. Desgleichen sind die entlang der Spalten 24 bis 26 jeweils angeordneten Knoten 11, 21 und 31 sowie 12, 22 und 32 bzw. 13, 23 und 33 ebenfalls durch jeweils drei optische Fasern 27 bis 29 miteinander verbunden.

In dem allgemeinen Fall, daß entlang einer Zeile die Anzahl m von Knoten angeordnet ist und entlang einer Spalte die Anzahl n, beträgt die Zahl der in Zeilenrichtung verlaufenden optischen Fasern, die je zwei Knoten paarweise miteinander verbinden m und die in Spaltenrichtung verlaufenden optischen Fasern n, wobei diese Faserbündel jeweils zu Kabeln zusammengefasst sind. Als Träger für die innerhalb des Netzes 10 möglichen Datenströme dienen nxm -beim dargestellten Ausführungsbeispiel 9-Lichtströme der definiert verschiedenen Wellenlängen λ_{I}, λ_{II}, ..., λ_{IX}. Da von jedem Knoten aus (nxm-1) Knoten adressierbar sein müssen, muss auch jeder Knoten in der Lage sein, 8 Lichtströme der genannten Wellenlängen aussenden und empfangen zu können.

In dem allgemeinen Fall, daß entlang einer Zeile die Anzahl m von Knoten angeordnet ist und entlang einer Spalte die Anzahl n, dienen nxm definiert verschiedene Wellenlängen λ_{I}, λ_{II}, ..., λₙₓₘ als Träger für die innerhalb des Netzes 10 möglichen Datenströme, oder es dienen k definiert verschiedene Wellenlängen λ₁, λ₂, ..., λₖ und j verschiedene Zeitschlitze S₁, S₂, ..., Sj die kombiniert zu Paaren die Adressen I=(λ₁, S₁), II=(λ₁, S₂), ..., nxm=(λₖ, Sj) repräsentieren als Träger für die Datenströme (wobei nxm ≤ kxj sein muß) oder nxm definiert verschiedene Zeitschlitze S_{I}, S_{II}, ..., Sₙₓₘ zu denen die Knoten jeweils sende- und empfangsbereit sind.

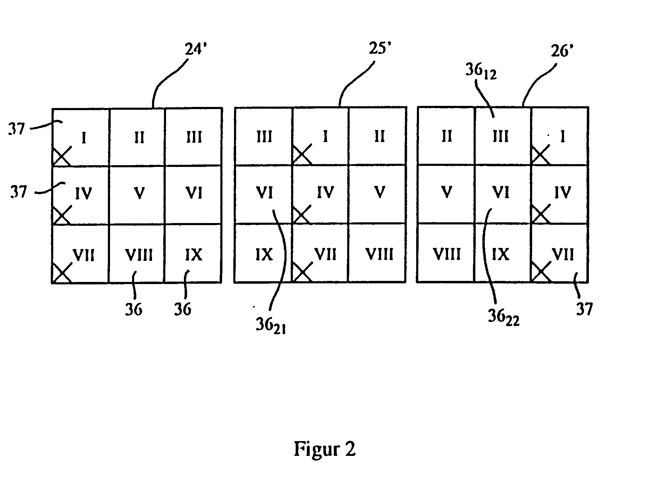

Zur Erläuterung eines geeigneten Adressierverfahrens, gemäß welchem die Adressierung der einzelnen Knoten von jedem beliebigen Knoten aus erfolgen kann, sei nunmehr ergänzend auf die Fig. 2 verwiesen, in der in einer zu der Fig. 1 analogen Anordnung der Spalten 24 bis 26 entsprechende Adressierfelder 24' bis 26' dargestellt sind und innerhalb derer durch je ein Ziffernfeld 36 eine der Wellenlängen repräsentiert ist, unter denen der jeweilige Knoten einen Information-Lichtstrom aussenden kann. Diese Ziffemfelder entsprechen hinsichtlich ihrer matrixförmigen Anordnung der Matrixanordnung der Knoten 11 bis 13, 21 bis 23 und 31 bis 33 , wobei durch die jeweils "angekreuzten" Felder 37 ein Sendeknoten bezeichnet ist, und durch die Anordnung innerhalb der Matrix 36, 37 jeweils der "Ziel"-Knoten bezeichnet ist, der angesprochen werden soll. Aus der Darstellung der Fig. 2 ergibt sich somit, daß vom Knoten 11 aus der Knoten 12 durch die Wellenlänge II angesprochen wird, während der Knoten 13 von dem Knoten 11 aus über die Wellenlänge III angesprochen wird.

Die Knoten 21 bis 23 des Netzes 10 gemäß Fig. 1 werden, in dieser Reihenfolge, von dem Knoten 11 aus durch die Wellenlängen IV und V bzw. VI angesprochen. Die Knoten 31 bis 33 des Netzes 10 gemäß Fig. 1 sind vom Knoten 11 dieses Netzes 10 aus, in der genannten Reihenfolge, über die Wellenlängen VII, VIII und IX ansprechbar.

Die Adressierung der einzelnen Knoten über die insgesamt 9 Lichtströme definiert verschiedener Wellenlängen I bis IX erfolgt zum einen durch Auswahl der optischen Fasern 17 bis 19, über die im Ergebnis die Spalten 24 bis 26 angewählt werden, und zum anderen durch deren Adressierung innerhalb einer der Spalten 24 bis 26 durch die Wellenlänge der jeweiligen Informations-Lichtströme.

Die optischen Fasern 17 führen von jedem der Knoten der Spalten 25 und 26 des Netzes 10 gemäß Fig. 1 zur Spalte 24 des Netzes 10. Die optischen Fasern 18 leiten die Lichtströme der Knoten der Spalten 24 und 26 zur Spalte 25 des Netzes 10 und die optischen Fasern 19 die Lichtströme der Knoten 11,12 und 21,22 sowie 31 und 32 der Spalten 24 und 25 der Spalte 26 des Netzes 10 zu.

Die optischen Fasern 27 führen die Datenströme der Knoten 11, 12 und 13 der Zeile 14 des Netzes 10 gemäß Fig. 1 den Knoten 21 bis 23 der Zeile 15 und den Knoten 31 bis 33 der Zeile 16 zu. Die optischen Fasern 28 leiten die Lichtströme der Knoten der Zeile 15 den Knoten der Zeilen 14 und 16 zu und die optischen Fasern 29 führen die Lichtströme der Knoten der Zeile 16 den Knoten 11 bis 13 und 21 bis 23 der Zeilen 14 und 15 zu.

Soll beispielsweise von dem Knoten 23 des Netzes 10 gemäß Fig. 1 der Knoten 32 dieses Netzes 10 angesprochen werden, so erfolgt dessen Adressierung dadurch, daß über die "mittlere" optische Faser 18, die den Knoten 23 mit dem "zentralen" Knoten 22 des Netzes verbindet ein Lichtstrom der Wellenlänge IX gesendet wird, der über die weitere "mittlere" der den zentralen Knoten 22 mit dem gemäß der Darstellung der Fig. 1 darunter angeordneten Knoten 32 verbindende optische Faser 28 diesem Knoten 32 zugeleitet wird.

Auf analoge Weise sind gemäß der Adressiertabelle der Fig. 2 von jedem der Knoten 11 bis 13, 21 bis 23 und 31 bis 33 aus die anderen Knoten adressierbar.

In dem allgemeinen Fall, daß entlang einer Zeile jeweils m Knoten angeordnet sind und entlang einer Spalte jeweils n, beträgt die Zahl der vom k-ten Knoten einer Zeile unidirektional in positiver Zeilenrichtung gespeisten optischen Fasern (m-k) gemäß der (m-k) Spalten mit jeweils n Knoten die von k Knoten der Zeile aus ansprechbar sind, und die Zahl der unidirektional in negativer Zeilenrichtung mit Datenströmen gespeisten optischen Fasern (k-1) gemäß der (k-1) Spalten mit jeweils n Knoten die von (m-k+1) Knoten der Zeile aus ansprechbar sind. Die Zahl der vom j-ten Knoten einer Spalte aus unidirektional in positiver Spaltenrichtung "nach oben" von Datenflüssen durchströmten optischen Fasern beträgt (j-1) gemäß der (j-1) Knoten die von (n-j) Zeilen mit jeweils m Knoten aus ansprechbar sind und die Zahl der vom j-ten Knoten einer Spalte unidirektional in negativer Spaltenrichtung "nach unten" von Datenflüssen durchströmten optischer Fasern beträgt (n-j) gemäß der (n-j) Knoten die von j Zeilen mit jeweils m Knoten aus angesprochen werden.

Als weiteres Adressierungsbeispiel wird die Adressierung des Knotens 21 des Netzes 10 gemäß Fig. 1 von dem Knoten 12 aus erläutert, die gemäß der Adressiertabelle der Fig. 2 über die Wellenlänge VI erfolgt, wie durch das Ziffernfeld 36₂₁ des Adressierfeldes 25' angegeben. Der Lichtstrom der "Adressier"-Wellenlänge VI gelangt über die den Knoten 12 mit dem Knoten 11 verbindende optische Faser 17 zum Knoten 11 und wird über diesen gleichsam zu dessen Ausgangsleitung 27 durchgeschleift, die innerhalb des Knotens 21 zu einem Empfänger 49 des Knotens 21 gelangt, der dadurch adressiert und angesteuert wird.

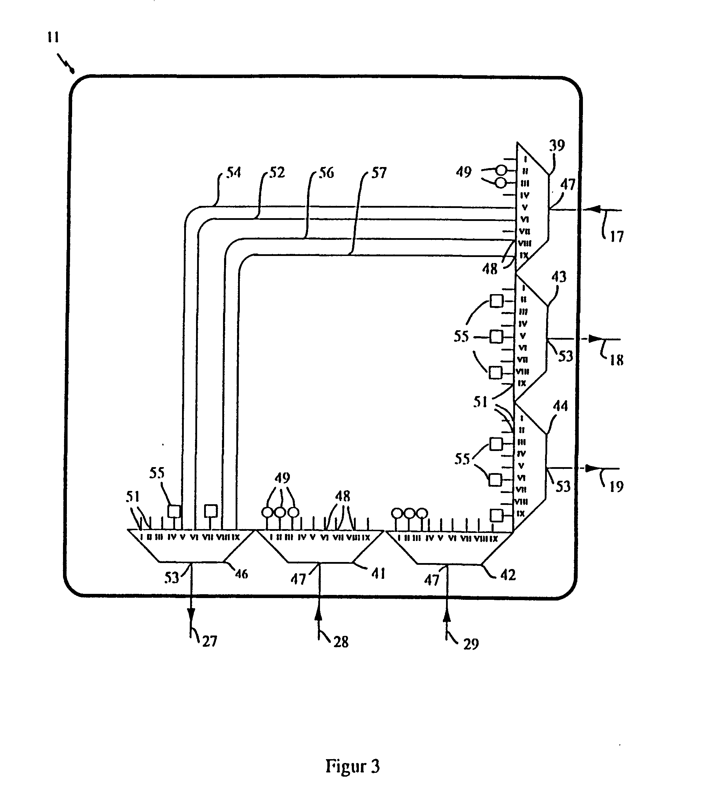

Der "Eckknoten" 11, über den im erläuterten Fallbeispiel der Adressier-Lichtstrom zu dem Knoten 21 geleitet wird, hat mehr im Einzelnen den aus der Fig. 3 ersichtlichen Aufbau, auf die nunmehr Bezug genommen sei:

Der Knoten 11 umfaßt in der im Einzelnen aus der Fig. 3 ersichtlichen Anordnung drei Wellenlängen-Demultiplexer 39 und 41 sowie 42 und drei Wellenlängen-Multiplexer 43 und 44 sowie 46.

Die Wellenlängen-Demultiplexer bilden Empfangselemente, die einen ihnen zugeleiteten Lichtstrom, der Teillichtströme enthält, die einer oder mehreren der Wellenlängen I bis IX entsprechen, in die einzelnen Lichtstromkomponenten der verschiedenen Wellenlängen aufteilt. Demgemäß hat jeder dieser Wellenlängen-Demultiplexer 39 und 41 bzw. 42 einen optischen Eingang 47, an dem die zum Knoten 11 führende optische Faser 17 und 28 bzw. 29 angeschlossen ist und 9 Ausgänge 48, an denen räumlich voneinander getrennt in geordneter Folge die den verschiedenen Wellenlängen I bis IX entsprechenden Teillichtströme austreten, soweit sie in dem über den Eingang 47 zugeleiteten Gesamtlichtstrom enthalten sind. Je nach Funktion dieser Teillichtströme sind diese entweder einem Empfänger 49 zugeleitet, der ihre Umsetzung in elektrische Signale vermittelt, die einer elektronischen Weiterverarbeitung zugeführt werden oder zur Eingangsseite eines der Wellenlängen-Multiplexer 46 bzw. 43 oder 44 geleitet, welche die Ausgangsglieder des jeweiligen Knotens 11 bis 13, 21 bis 23 und 31 bis 33 bilden und einer der Anzahl der Wellenlängen I bis IX entsprechende Anzahl von Koppel-Eingängen 51 haben, die entweder mit einem der Ausgänge 48 eines der Wellenlängen-Demultiplexer verbunden sind, um z.B. einen Lichtstrom über den Knoten 11 lediglich weiterzuleiten, oder an einen Sender 55 angeschlossen sind, über den Informationssignale in den jeweiligen Multiplexer 43 oder 44 bzw. 46 einkoppelbar sind, die digitale Daten repräsentieren, die von einem der Knoten zu dem jeweils adressierten Knoten weitergeleitet werden sollen und über diesen einer weiteren Verarbeitung zugänglich sein sollen.

Bei dem in der Fig. 3 dargestellten Eckknoten 11 erfolgt dessen Adressierung von dem Knoten 12 aus über die im rechten oberen Teil der Fig. 3 dargestellte, an den optischen Eingang 47 des Wellenlängen-Demultiplexers 39 angeschlossene optische Lichtleitfaser 17, deren Lichtstromkomponente der Wellenlänge VI, die zur Adressierung des Knotens 14 ausgenutzt ist, über einen internen Wellenleiter 52 zu dem ebenfalls der Wellenlänge VI zugeordneten Koppeleingang 51 des im linken unteren Teil der Fig. 3 dargestellten Wellenlängen-Multiplexers 46 führt und von dessen optischem Ausgang 53 aus in die optische Faser 34 eingekoppelt wird, die zu dem Knoten 21 führt. Von dem "Eingangs"-Demultiplexer 39 führt ein zweiter zur Adressierug eines Knotens vorgesehener Wellenleiter 54 zu dem "Ausgangs"-Multiplexer 46, an den auch der erste Wellenleiter 52 angeschlossen ist, wobei dieser zweite Wellenleiter für die Übertragung des Lichtstromes der Wellenlänge V vorgesehen ist, mittels derer von dem "adressierenden" "rechten" Eckknoten 13 aus, derselbe Knoten 21 ansprechbar ist.

Die beiden weiteren Wellenleiter 56 und 57, die den Eingangs-Wellenlängen-Demultiplexer 39 mit dem Ausgangs-Wellenlängen-Multiplexer 46 verbinden, sind zum einen für die Adressierung des im linken unteren Teil der Fig. 1 dargestellten Eckknotens 31 vom rechten oberen Knoten 13 aus mittels der Wellenlänge VIII und zum anderen zur Adressierung des Eckknotens 31 von dem zwischen den beiden Eckknoten 11 und 13 des Netzes 10 gemäß Fig. 1 angeordneten Knoten 12 aus mittels der Wellenlänge IX vorgesehen.

Die beiden "unterhalb" des Eingangs-Demultiplexers 39 angeordneten Wellenlängen-Multiplexer 43 und 44 sind zum einen dafür vorgesehen, die Signale zur Adressierung der in den Spalten 25 und 26 angeordneten Knoten 12, 22 und 32 bzw. 13, 23 und 33 abzugeben, wobei die in der Spalte 25 (Fig. 1) angeordneten Knoten über den Wellenlängenmultiplexer 43 adressierbar sind, wobei die Adressierung des Knotens 12 mittels der Wellenlänge II, die Adressierung des Knotens 22 mittels der Wellenlänge V und die Adressierung des Knotens 32 mittels der Wellenlänge VIII jeweils über die optische Faser 18 erfolgt, während die in der Spalte 26 angeordneten Knoten 13, 23 und 33 mittels des Wellenlängen-Multiplexers 44 adressierbar sind, wobei die Adressierung des Eckknotens 13 mittels der Wellenlänge III, die Adressierung des mittleren Knotens 23 mittels der Wellenlänge VI und die Adressierung des rechten unteren Eckknotens 33 der Fig. 1 mittels der Wellenlänge IX, jeweils über die optische Faser 19 erfolgt.

Die diesbezüglich erforderlichen Adressierungs-Lichtströme werden von den Sendern 55 erzeugt, die an die entsprechenden, den einzelnen Wellenlängen der Übertragungs-Lichtströme zugeordneten Eingänge 51 der Multiplexer 43 und 44 angeschlossen sind. Sender 55 mit dieser Funktion der Erzeugung von Lichtströmen, die durch ihre Wellenlängen einzelne der Knoten adressieren, sind auch für den im linken unteren Teil der Fig. 3 dargestellten "Ausgangs"-Multiplexer vorgesehen, der zur Adressierung der in der linken Spalte 24 des Matrix-Netzes 10 angeordneten Knoten 21 und 31 ausgenutzt wird.

Empfänger 49 mit der Funktion der Transformation der in den Lichtströmen kodierten Datenströme auf elektrische Signalleitungen sind auch für die Wellenlängen Demultiplexer 41 und 42 vorgesehen, die an den Ausgängen 48 der Wellenlängen I bis III angeschlossen sind, um von den Knoten 21 bis 23 und 31 bis 33 der Zeilen 15 und 16 des Netzes 10 gemäß Fig. 1 angesprochen werden zu können.

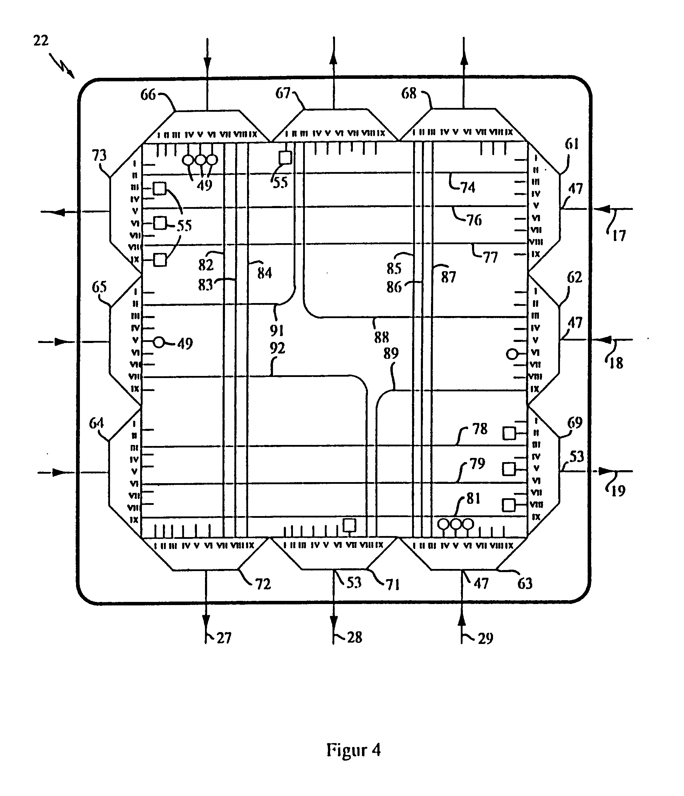

Auch der in der Fig. 4 dargestellte zentrale Kreuzknoten 22 des Netzes 10 ist in der zum Aufbau des anhand der Fig. 3 geschilderten Eckknotens 11 analogen Weise aus Wellenlängen-Demultiplexem 61, 62, 63, 64 und 65 bzw. 66, einerseits und Wellenlängen-Multiplexern 67, 68, 69, 71 und 72 bzw. 73 andererseits, aufgebaut, an deren Eingänge 47 bzw. optische Ausgänge 53 je eine der optischen Fasern 17 bis 19 bzw. 27 bis 29 angeschlossen ist, über die in "Zeilenrichtung" oder in "Spaltenrichtung" Adressier- und Informationssignale dem Knoten 22 zugeleitet werden bzw. von diesem ausgesandt werden.

Die Informationssignale "in Zeilenrichtung" übertragende "interne" Wellenleiter sind mit 74, 76, 77 sowie 78, 79 und 81 bezeichnet; funktionell entsprechende Lichtwellenleiter, welche die Adressier- und Informationssignale "in Spaltenrichtung" über den Zentralknoten übertragen sind mit 82, 83 und 84 bzw. 85, 86 und 87 bezeichnet, während Lichtwellenleiter, über die Eingangslichtströme, die jeweils über die "mittleren" optischen Fasern 29 den Wellenlängen-Demultiplexern 62 bzw. 65 zugeleitet sind, in die Richtung der zweiten Spalte 25 des Matrix-Netzes 10 umgelenkt werden, mit 88 und 89 bzw. 91 und 92 bezeichnet sind.

Entsprechend der Zahl von Lichtströmen, die von den Knoten 11 bis 13, 21 und 23 und 31 bis 33, zu dem zentralen Knoten 22 geleitet werden, ist dieser mit insgesamt 8 Empfängern 49 versehen und ebenfalls entsprechend der Anzahl der vom zentralen Knoten 22 aus adressierbaren Knoten, ist der zentrale Knoten 22 auch mit 8 Sendern 55 versehen, die jeweils auf einer der insgesamt 8 Wellenlängen I bis III und V bis IX senden.

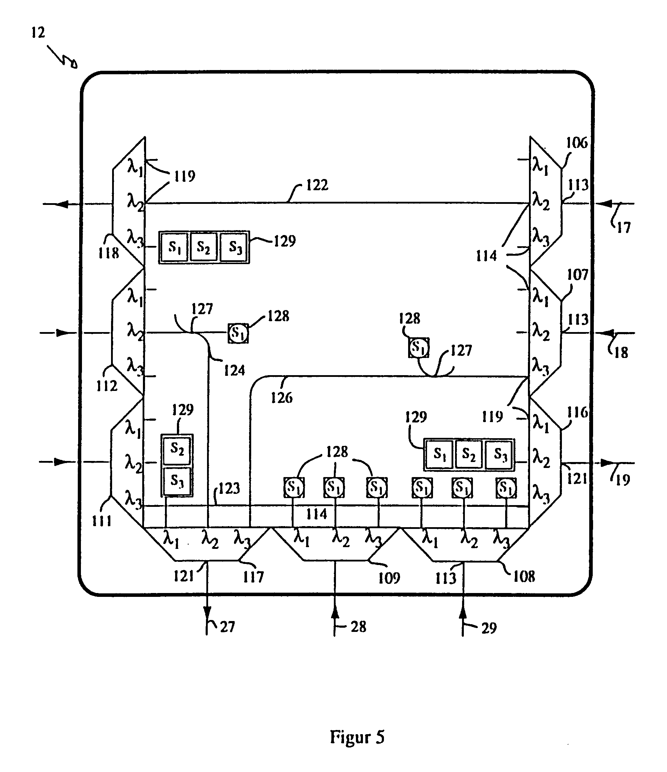

Für das in der Fig. 5 dargestellte, weitere Ausführungsbeispiel ist - ohne Beschränkung der Allgemeinheit - wiederum angenommen, daß das Netz insgesamt neun Knoten umfasst, die in einer "quadratischen" 3x3-Matrix angeordnet sind, und daß die Adresseninformation sowohl in die Wellenlängen der Lichtströme als auch in Zeitschlitze, in denen die Sender und Empfänger sende- bzw. empfangsbereit sind, kodiert ist. Zur Erläuterung sei im weiteren auf die Tabelle 1 verwiesen,

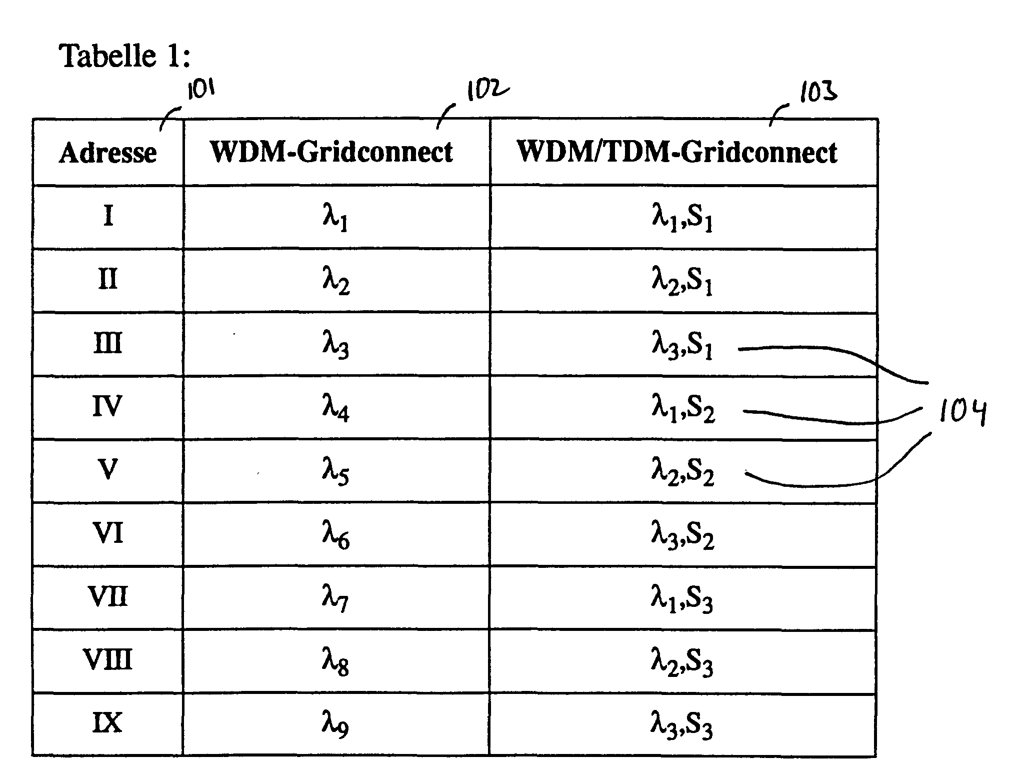

in deren erster Spalte 101 die Adressen I, II, ..., IX in dieser Reihenfolge aufgelistet stehen, denen die mit der Spalte 102 angegebenen verschiedenen Wellenlängen λ₁, λ₂, ..., λ₉ oder die in der Spalte 103 aufgelisteten Wellenlängen-Zeitschlitz-Paare (λ₁,S₁), (λ₂,S₁), (λ₃,S₁), (λ₁,S₂), ..., (λ₃,S₃) 104 der Wellenlängen λ₁, λ₂ und λ₃ und der Zeitschlitze S₁, S₂ und S₃ zugeordnet werden. Mit dieser Zuordnung von Wellenlängen-Zeitschlitzpaaren zu Adressen, analog zu der Adressiertabelle der Fig. 2 ist eine Verwendung der Adressierfelder 24' bis 26' der Fig. 2 zur Beschreibung des Adressierungsverfahrens des zweiten Ausführungsbeispiels möglich. Hierfür sei nun auf Fig. 5 verwiesen, die den zweiten Knoten 12 der ersten Zeile 14 des Netzes 10 gemäß Fig. 1 mehr im Einzelnen abbildet:

Die Wellenlängen-Demultiplexer 106 bis 108 und 109, 111, und 112 zerlegen als Empfangselemente die an ihren optischen Eingängen 113 über die optischen Fasern 17, 18, 29, 28 und 19 eingespeisten Lichtströme in Teillichtströme der Wellenlängen λ₁, λ₂ und λ₃, die an den optischen Ausgängen 114 wieder austreten. Die Wellenlängen-Multiplexer 116 bis 118 führen die an den optischen Eingängen 119 eingespeisten Teillichtströme der Wellenlängen λ₁, λ₂ und λ₃ an den optischen Ausgängen 121, an die die optischen Fasern 19, 27 und 17 angeschlossen sind wieder zusammen auf einen einzigen optischen Wellenleiter. Weiter werden wieder wie schon anhand des ersten Ausführungsbeispiel beschrieben, die von dem Knoten 13 ausgehenden Datenströme zu Spalte 24 des Netzes 10 gemäß Fig. 1 und die Ausgangs-Datenströme des Knotens 11 zu Spalte 26 des Netzes 10 gemäß Fig. 1 "durchgeschleift", wobei ein Lichtwellenleiter 122 den der Wellenlänge λ₂ zugeordneten optischen Ausgang 114 des Wellenlängen-Demultiplexers 106 mit dem der Wellenlänge λ₂ zugeordneten optischen Eingangs 119 des Wellenlängen-Multiplexers 118 verbindet und ein weiterer Lichtwellenleiter 123 den der Wellenlänge λ₃ zugeordneten optischen Ausgang 114 des Wellenlängen-Demultiplexers 111 mit dem der Wellenlänge λ₃ zugeordneten optischen Eingangs 119 des Wellenlängen-Multiplexers 116 verbindet. Desweiteren verbinden optische Wellenleiter 124 und 126 die optischen Ausgänge 114 der Wellenlängen-Demultiplexer 107 und 112 mit den optischen Eingängen 119 der Wellenlängen-Multiplexer, die den Wellenlängen λ₂ bzw. λ₃ zugeordnet sind. Optische Leistungsteiler 127 ermöglichen Zeitdemultiplexempfängern 128 das Empfangen der innerhalb des Zeitschlitzes S₁ gesendeten Datenströme die gemäß der Adressiertabelle der Fig. 2 und der Zuordnung gemäß der Tabelle 1 zur Adressierung des Knotens 12 verwendet werden. Enden die von den Knoten 21 bis 23 und 31 bis 33 ausgesandten an die Knoten der Spalte 25 des Netzes 10 gemäß Fig. 1 adressierten Datenströme bei dem Knoten 12, so können die Zeitdemultiplexempfänger 128 direkt die Teillichtströme an den optischen Ausgängen 114 der Wellenlängen-Demultiplexer 108 und 109 abgreifen und zur Detektion der Datenströme innerhalb des Zeitschlitzes S₁ nutzen.

Die Zeitmultiplexsender 129 senden auf jeweils einer der Wellenlängen λ₁, λ₂ und λ₃ einen Lichtstrom mit drei Teildatenströmen aus, auf die jeweils innerhalb der Zeitschlitze S₁, S₂ und S₃ zugegriffen werden kann. Diese Lichtströme werden auf die optischen Eingänge 119 der Wellenlängen-Multiplexer 116, 117 und 118 geführt, die jeweils entsprechend der adressierten Spalte 24 oder 25 oder 26 des Netzes 10 gemäß Fig. 1 einer der Wellenlängen λ₁, λ₂ und λ₃ zugeordnet sind. Ein Lichtstrom, der beispielsweise von dem Knoten 13 des Netzes 10 gemäß Fig. 1 zu dem zentralen Knoten 22 geleitet ist, wird durch die Wahl der Faser 18, der Wellenlänge λ₃ und dem Zeitschlitz S₂ gemäß Adressierfeld 27' und Ziffernfeld 36₂₂ der Fig. 2 und der Zuordnung der Spalte 103 der Tabelle 1 kodiert und wird beim Knoten 12 des Netzes 10 gemäß Fig. 1 am optischen Eingang 113 des Wellenlängen-Demultiplexers 107 gemäß Fig. 5 empfangen. Der Lichtstrom tritt am optischen Ausgang 114 desjenigen Wellenlängen-Demultiplexers 107, der der Wellenlänge λ₃ zugeordnet ist aus und wird von dem Wellenleiter 126 aufgenommen, aus dem am Leistungsteiler 127 optische Leistung ausgekoppelt und an den Zeitdemultiplexempfänger 128 abgegeben wird, um am optischen Eingang 119 des Wellenlängen-Multiplexers 117 der der Wellenlänge λ₃ zugeordnet ist über den optischen Ausgang 121 auf die optische Faser 27 geführt zu werden.

Über diese optische Faser 27 wird der Lichtstrom dem Bestimmungsknoten 22 zugeführt.

Der Datenstrom der vom Knoten 13 des Netzes 10 gemäß Fig. 1 dem Knoten 12 zugeführt wird, ist durch die Wahl der Faser 18, der Wellenlänge λ₃ und des Zeitschlitzes S₁ gemäß Adressierfeld 26' und Ziffernfeld 36₁₂ der Fig. 2 und der Zuordnung der Spalte 103 der Tabelle 1 kodiert und wird beim Knoten 12 des Netzes 10 gemäß Fig. 1 am optischen Eingang 113 des Wellenlängen-Demultiplexers 107 gemäß Fig. 5 empfangen.

Analog wird der an dem der Wellenlänge λ₃ zugeordneten am optischen Ausgang 114 des Wellenlängen-Demultiplexers 107 austretende Lichtstrom von dem Wellenleiter 126 aufgenommen, aus dem am Leistungsteiler 127 optische Leistung ausgekoppelt und an den Zeitdemultiplexempfänger 128 abgegeben wird. Dieser kann im elektronischen Bereich den Teildatenstrom der innerhalb des Zeitschlitzes S₁ gesendet wird von den Teildatenströmen, die innerhalb der Zeitschlitze S₂ und S₃ gesendet werden, trennen und so einer Weiterverwendung zuführen. Analog kann auf diese Weise jeder der Knoten 11 bis 13, 21 bis 23 und 31 bis 33 des Netzes 10 gemäß Fig. 1 jeden anderen der Knoten 11 bis 13, 21 bis 23 und 31 bis 33 adressieren und ansprechen, und auch von jedem dieser Knoten 11 bis 13, 21 bis 23 und 31 bis 33 Daten empfangen.

In analoger Weise zu dem im ersten Ausführungsbeispiel beschriebenen Verfahren kann auch eine Adressierung mit nxm definiert verschiedenen Zeitschlitzen erfolgen, wofür allerdings eine Zeitmultiplexierung und Zeitdemultiplexierung im optischen Bereich erforderlich ist, die eine Synchronisation der Lichtströme untereinander vorrausetzt. Es wären dann die Wellenlängen-Multiplexer 43, 44, 46 gemäß der Fig. 3 und 68, 69, 72 und 73 gemäß der Fig. 4 durch optische Zeitmultiplexer und die Wellenlängen-Demultiplexer 39, 42, 41 gemäß der Fig. 3 und 61, 62, 63, 64, 65 und 66 gemäß der Fig. 4 durch optische Zeitdemultiplexer zu ersetzen.

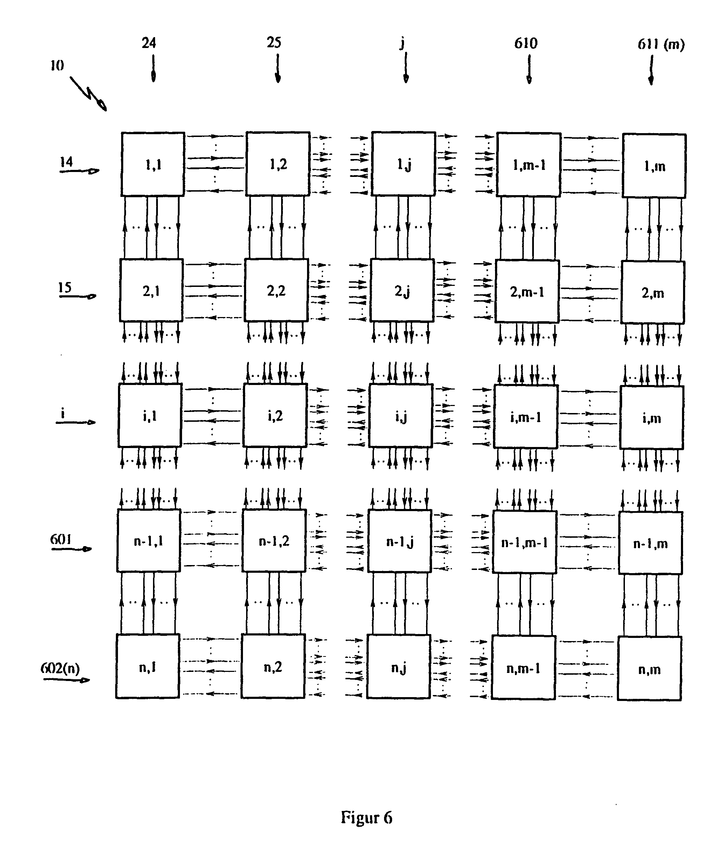

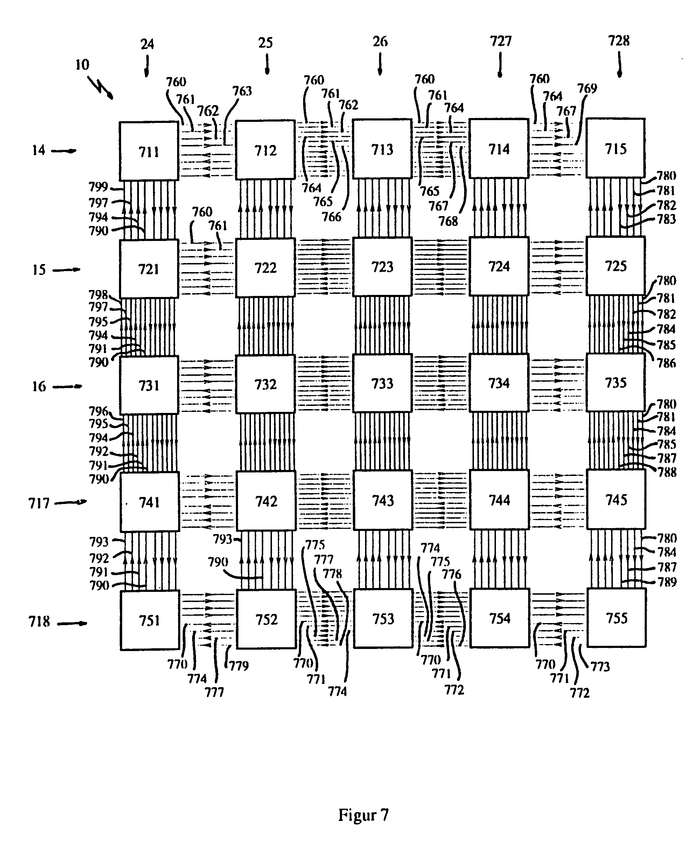

Auch für das in den Figuren 6 und 7 dargestellte, weitere Ausführungsbeispiel eines Netzes 10 mit maximierter Ausnutzung der durch die Glasfaserverbindungen bereitgestellten Übertragungskapazität, ist angenommen, daß das in Fig. 6 insgesamt mit 10 bezeichnete Netz allgemein n·m Knoten umfaßt. Die Zeilen 14, 15 bis 601 und 602(n) des Netzes 10 sind mit i indiziert und die Spalten 24, 25 bis 610 und 611(m) des Netzes 10 sind mit j indiziert, wobei i = (1,2,..,n-1,n) und j = (1,2,..,m-1,m) gilt. Die Knoten (1,1 bis n,m) sind entsprechend ihrer Zeile i und ihrer Spalte j mit der entsprechenden Indexkombination i,j bezeichnet.

Von jedem Knoten (i,1) der Spalte 24 führen (m-1) optische Glasfasern in "mathematisch" positiver Zeilenrichtung (von "links" nach "rechts" gelesen) zu den Nachbarknoten (i,2). Von jedem Knoten (i,m) der Spalte 611 führen (m-1) optische Glasfasern in mathematisch negativer Zeilenrichtung (von "rechts" nach "links" gelesen) zu den Nachbarknoten (i,(m-1)). Von jedem Knoten (1,2 bis 1,(m-1); 2,2 bis 2,(m-1);..; n,2 bis n,(m-1)) der Spalten 25 bis 610 sind (m-j)·j optische Glasfaserverbindungen in mathematisch positiver Zeilenrichtung zu den Nachbarknoten (i,(j+1)) der Zeile i gezogen und (m-j+1)·(j-1) Glasfaserverbindungen in mathematisch negativer Zeilenrichtung zu den Nachbarknoten (i,(j-1)) der Zeile i geführt. So ergibt sich zwischen den Knoten (1,1 bis n,m) jeweils eine paarweise und der Ausbreitungsrichtung der Lichtströme nach symetrische Verbindung von 2·(m-j)·j Fasern zwischenden Knoten (i,j) und (i,(j+1)) der Zeile i.

Von jedem Knoten (1,j) der Zeile 14 führen (n-1) optische Glasfasern in mathematisch positiver Spaltenrichtung (von "oben" nach "unten" gelesen) zu den Nachbarknoten (2,j).

Von jedem Knoten (n,j) der Zeile 602 führen (n-1) optische Glasfasern in mathematisch negativer Spaltenrichtung (von "unten" nach "oben" gelesen) zu den Nachbarknoten ((n-1),j). Von jedem Knoten (2,1;..; 2,m;..; (n-1),1;..;(n-1),m) der Zeilen 15 bis 601 sind (n-i)·i optische Glasfaserverbindungen in mathematisch positiver Spaltenrichtung zu den Nachbarknoten ((i+1),j) der Spalte j gezogen und (n-i+1)·(i-1) Glasfaserverbindungen in mathematisch negativer Spaltenichtung zu den Nachbarknoten ((i-1),j) der Spalte j geführt. So ergibt sich zwischen den Knoten (1,1 bis n,m) jeweils eine paarweise und der Ausbreitungsrichtung der Lichtströme nach symetrische Verbindung von 2·(n-i)·i Fasern zwischen den Knoten (i,j) und ((i+1),j) der Spalte j.

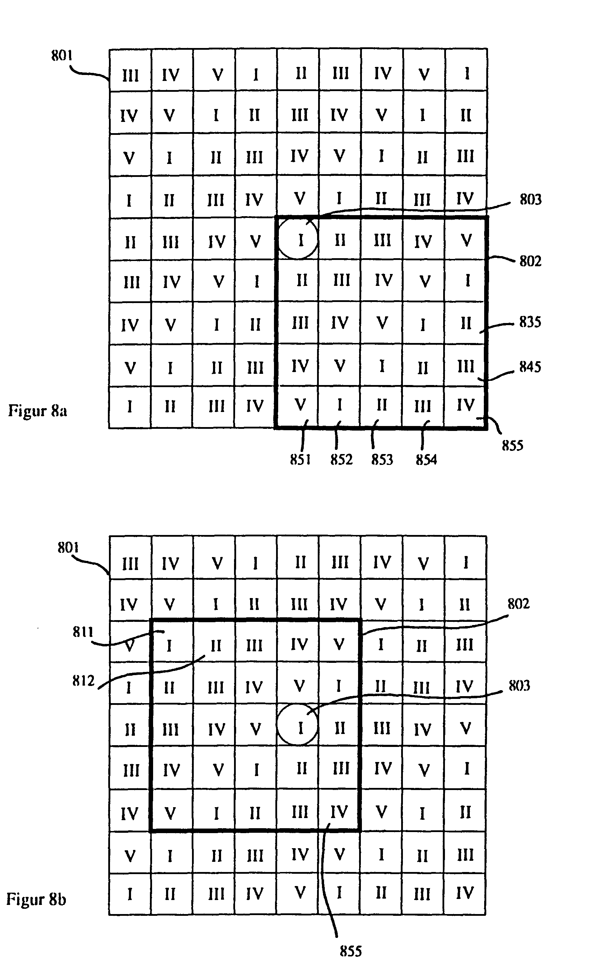

Zur Erläuterung des zur Maximierung der Ausnutzung der Übertragungsbandbreite der Fasern geeigneten Adressierungsverfahrens wird nunmehr auf die Fig. 7 und die Tabelle 801 der Fig. 8a und 8b Bezug genommen. Bei dem in Fig. 7 dargestellten Netz 10 sindohne Beschränkung der Allgemeinheit - 25 Knoten (711-715, 721-725, 731-735, 741-745, 751-755) vorgesehen, die in einer "quadratischen" 5x5-Matrix angeordnet sind.

Diese Knoten sind durch die Datenübertragungsleitungen (Glasfasern) (760-779) und (780-799) paarweise entlang der Zeilen 14, 15, 16, 717 und 718 und entlang der Spalten 24, 25, 26, 727 und 728 zu einem Gitternetz verbunden.

In den Figuren 8a und 8b ist eine Adressiertabelle 801 in zwei verschiedenen Positionen eines "Leserahmens" 802 dargestellt, die zwei verschiedenen "Adressierungsaufgaben" entsprechen, wobei in der Fig. 8a der Fall dargestellt ist, daß die innerhalb des Rahmenfensters angeordneten Wellenlängen-Angaben I bis V die Wellenlängen angeben, unter denen von dem Knoten 1,1 aus sämtliche anderen Knoten des Netzes 10 gemäß Fig. 7 adressierbar sind, während die in der Fig. 8b dargestellte Position des Leserahmens 802 der Problemstellung entspricht, ablesen zu können, mit welchen Wellenlängen von dem Knoten 3,4 aus sämtliche anderen Knoten des Netzes adressierbar sind, jeweils natürlich in Kombination mit der ausgewählten Faser, über die dieser Knoten mit den anderen Knoten dieses Netzes verbindbar ist.

Die Adressienabelle ist so aufgebaut, daß der sendende Knoten durch das eingekreiste, zentrale Feld 803 repräsentiert ist und je nach Anordnung des Rahmens 802 dessen Indizierung innerhalb des Netzes gemäß Fig. 7 des sendenden Knotens ausgewählt wird.

Dessen Indizierung wird gleichsam in der "Matrixanordnung" des Leserahmens 802 aufgesucht und der Leserahmen so positioniert, daß der der ausgesuchten Indizierung entsprechende Knoten mit dem Feld 803 der Adressiertabelle 801 zusammenfällt. Innerhalb des Leserahmens 802 ist dann unmittelbar ablesbar, mit welchen Wellenlängen vom Sendeknoten aus die anderen Knoten des Netzes adressierbar sind.

Demnach werden die Knoten 721, 731, 741 und 751 der Spalte 24 gemäß Fig. 7 vom Knoten 711 aus mit den Wellenlängen II, III, IV und V angesprochen. Die Knoten 712, 722, 732, 742 und 752 der Spalte 25, die Knoten 713, 723, 733, 743 und 753 der Spalte 26, die Knoten 714, 724, 734, 744 und 754 der Spalte 727 und die Knoten 715, 725, 735, 745 und 755 der Spalte 728 gemäß Fig. 7 werden vom Knoten 711 aus mit den Wellenlängen I, II, III, IV und V angesprochen.

Die Fasern 760 bis 779 der Zeilen 14, 15, 16, 717 und 718, welche die Spalten 24, 25, 26, 727 und 728 jeweils paarweise miteinander verbinden, sind nach der Ursprungsspalte und der Zielspalte der mit der Faser geleiteten - transportierten - Datenströme bezeichnet.

Analog sind die Fasern 780 bis 799 der Spalten 24, 25, 26, 727 und 728, welche die Zeilen 14, 15, 16, 717 und 718 jeweils paarweise miteinander verbinden, nach der Ursprungszeile und der Zielzeile der mit der Faser transportierten Datenströme bezeichnet. Die Fasern der Zeilen 14, 15, 16, 717 und 718 heißen demnach gleichsam: "von Spalte j_{Sender} nach Spalte j_{Empfänger}", und die Fasern der Spalten 24, 25, 26, 727 und 728 heißen demnach: "von Zeile i_{Sender} nach Zeile i_{Empfänger}".

Die Bezeichnungen aller Fasern 760 bis 799 des Netzes 10 sind in der Tabelle 2 aufgeführt. Den Spalten 201 und 202 der Tabelle 2 ist beispielsweise zu entnehmen, daß die Fasern 760 welche von den Knoten 711, 721, 731, 741 und 751 der Spalte 24 ausgehende Datenströme zu den Knoten 715, 725, 735, 745 und 755 der Spalte 728 gemäß Fig. 7 führen, als diejenigen Fasern bezeichnet sind, die Datenströme "aus Spalte eins (24) nach Spalte fünf (728)" (C1→C5) tragen, bzw. als Fasern 762 diejenigen Fasern bezeichnet sind, die von den Knoten 711, 721, 731, 741 und 751 der Spalte 24 ausgehende Lichtströme zu den Knoten 713, 723, 733, 743 und 753 der Spalte 26 gemäß Fig. 7 führen, d. h. als Fasern, die Datenströme "aus Spalte eins (24) nach Spalte drei (26)" (C1→C3) tragen.

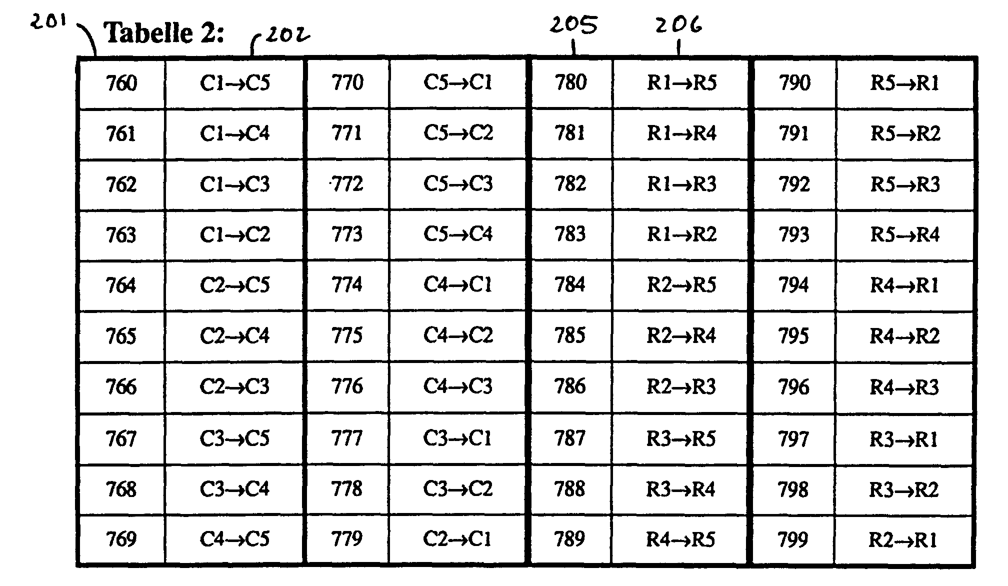

Den Spalten 205 und 206 der Tabelle 2 ist zu entnehmen, daß die Fasern 787, die von den Knoten 731, 732, 733, 734 und 735 der Zeile 16 ausgehende Lichtströme zu den Knoten 751, 752, 753, 754 und 755 der Zeile 718 gemäß Fig. 7 führen, als diejenigen Fasern bezeichnet sind, die Datenströme "aus Zeile drei (16) nach Zeile fünf (718)" (R3→R5) tragen.

Die Adressierung der einzelnen Knoten über die insgesamt 5 Lichtströme definiert verschiedener Wellenlängen I bis V erfolgt zum einen durch Auswahl der optischen Fasern 760 bis 779, über die im Ergebnis die Spalten 24, 25, 26, 727 und 728 angewählt werden, und zum anderen durch deren Adressierung innerhalb einer der Spalten 24, 25, 26, 727 und 728 durch die Wellenlänge der jeweiligen Informations-Lichtströme.

Die Auswahl der Fasern erfolgt dabei gemäß Tabelle 2 und die Auswahl der Wellenlänge mit der Adressiertabelle 801 gemäß den Figuren 8a und 8b.

Soll beispielsweise von dem Knoten 711 des Netzes 10 gemäß Fig. 7 der Knoten 742 dieses Netzes 10 angesprochen werden, so erfolgt dessen Adressierung dadurch, daß über die optische Faser 760, die den Knoten 711 (1,1) mit dem Knoten 712 des Netzes verbindet, ein Lichtstrom der Wellenlänge V (Abbildung 8a, Ziffernfeld 842) gesendet wird, der mittels der weiteren Fasern 781 über die Knoten 722 und 732 diesem Knoten 742 zugeleitet wird. Als weiteres Adressierungsbeispiel wird die Adressierung des Knotens 721 des Netzes 10 gemäß Fig. 7 von dem Knoten 734 aus erläutert, die gemäß der Adressiertabelle der Fig. 8b über die Wellenlänge II erfolgt, wie durch das Ziffernfeld 822 des Adressierfeldes 801 angegeben. Der Lichtstrom der "Adressier"-Wellenlänge II gelangt über die die Knoten 733 und 732 mit dem Knoten 731 verbindende optische Faser 774 zum Knoten 731 und wird über diesen gleichsam zu dessen Ausgangsleitung 798 durchgeschleift, die innerhalb des Knotens 721 zu einem Empfänger 49 dieses Knotens 721 gelangt, der dadurch adressiert und angesteuert wird.

Durch die Wahl der fünf definiert verschiedener Wellenlängen I, II, III, IV und V zur Adressierung innerhalb einer der Zeilen 14, 15, 16, 717 und 718 des Netzes 10 ergibt sich, daß keine der Wellenlängen I, II, III, IV und V zweimal innerhalb einer der Fasern 780 bis 799 in Anspruch genommen wird. Durch die zyklische Vertauschung der fünf definiert verschiedenen Wellenlängen I, II, III, IV und V unter den zu den Zeilen 14, 15, 16, 717 und 718 des Netzes 10 analogen Zeilen 814, 815, 816, 817 und 818 der Adressiertabelle 801 (Ziffernfelder 811 bis 815, 821 bis 825, 831 bis 835, 841 bis 845 und 851 bis 855) ergibt sich, daß keine der Wellenlängen zweimal innerhalb einer der Fasern 760 bis 779 in Anspruch genommen wird. In dem allgemeinen Fall, daß entlang einer Zeile jeweils m Knoten angeordnet sind und entlang einer Spalte jeweils n, entspricht die Zahl der zu wählenden definiert verschiedenen Wellenlängen der größeren der beiden Zahlen.

Die Knoten (711-715, 721-725, 731-735, 741-745, 751-755) können einen zu der in Fig. 3 und 4 beschriebenen Anordnung analogen Aufbau haben, wobei jede zu einem Knoten führende Faser 760 bis 799 zum Eingang 47 eines Wellenlängen-Demultiplexers führt, der die fünf definiert verschiedenen Wellenlängen des Lichtstroms räumlich trennt und an seinen Ausgängen 48 die Lichtsignale auf Wellenleiter lenkt. Diese Wellenleiter führen ihrerseits wiederum entweder zu einem Empfänger 49 oder zu einem der Eingänge 51 der Wellenlängen-Multiplexer, die die Lichtströme der definiert verschiedener Wellenlängen auf einen gemeinsamen Ausgang 53 zusammenführen. Zu diesen Eingängen 51 werden auch die Signale der Sender 55 auf Wellenleitern geführt. Jeder der Ausgänge 53 speist den nunmehr aus einer Überlagerung der Lichtströme der fünf definiert verschiedenen Wellelängen I, II, III, IV und V resultierenden Lichtstrom in eine der von den Knoten (711-715, 721-725, 731-735, 741-745, 751-755) aus wieterführenden Fasern 760 bis 799 ein. Entsprechend der Zahl von Lichtströmen, die von den Knoten (711-715, 721-725, 731-735, 741-745, 751-755) zu jedem anderen Knoten transportiert werden können, ist jeder dieser Knoten mit insgesamt 24 Empfängern 49 versehen, die jeweils auf einer der insgesamt fünf Wellenlängen I bis V empfangen können, und mit 24 Sendern 55, die jeweils auf einer der insgesamt fünf Wellenlängen I bis V senden können. In dem allgemeinen Fall, daß entlang einer Zeile jeweils m Knoten angeordnet sind und entlang einer Spalte jeweils n, beträgt die Zahl der Empfänger 49 und Sender 55 jedes Knotens jeweils (m·n - 1), wobei jede der m-1 definiert verschiedenen Wellenlängen, die zur Adressierung innerhalb einer Zeile verwendet werden, n mal benutzt wird. Die erste der m definiert verschiedenen Wellenlängen I wird gemäß Adressiertabelle 801 der Figuren 8a und 8b lediglich (n-1) mal benutzt.

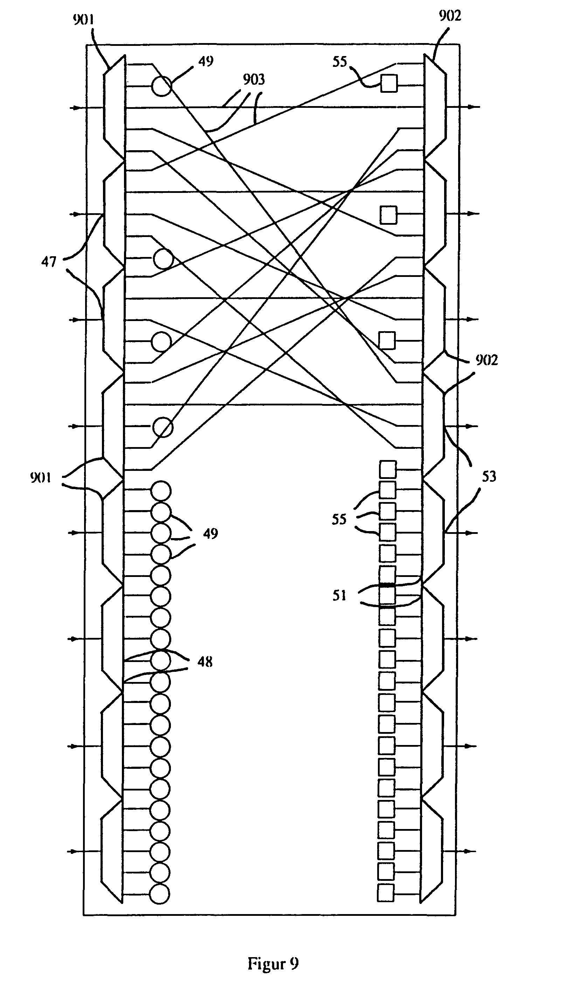

Zur Realisierung des anhand der Figuren 6 und 7 sowie 8 a und 8b erläuterten Netzes 10 ist die nunmehr anhand der Fig. 9 zu schildernde Ausbildung seiner Knoten vorgesehen, die für sämtliche Knoten des Netzes einheitlich ist.

Diejenigen Fasern, welche Lichtströme, die von einer Zeile oder einer Spalte des Netzes 10 ausgehen zu einer Zeile oder Spalte des Netzes 10 tragen, die jeweils beide nicht jener des Knotens (i,j) entsprechen, werden am Knoten (i,j) einfach hindurchgeführt. In Zeilenrichtung handelt es sich dabei um 2·(m-j)·(j-1) Fasern und in Spaltenrichtung um 2·(n-i)·(i-1) optische Glasfasern. Die verbleibenden (m-1) Fasern, die Daten welche aus Knoten der Zeile i kommen in die Spalte j übertragen, und die (n-1) Fasern, welche die Lichtströme aus den Zeilen (1,2,..,i-1,i+1,..,n) zu dem Knoten (i,j) transportieren, werden an die Eingänge 47 der Wellenlängendemultiplexer 901 gemäß Fig. 9 geführt. Die Wellenlängendemultiplexer 901 trennen die Lichtströme der definiert verschiedenen Wellenlängen I, II, III, IV und V räumlich und leiten diese Lichtströme zu den Ausgängen 48. An diesen Ausgängen 48 werden die Lichtströme entweder von Empfängern 49 oder Wellenleitern 903 aufgenommen. Die Empfänger 49 wandeln das optische Signal in ein elektrisches Signal und führen es der weiteren Verwendung zu. Die Wellenleiter 903 führen die Lichtströme, entsprechend der den Daten zugeordneten Zielknoten, zu Eingängen 51 der Wellenlängenmultiplexer 902 gemäß Fig. 9 die die Lichtströme der definiert verschiedenen Wellenlängen I, II, III, IV und V auf einen gemeinsamen Ausgang 53 zusammenführen. Jeder dieser Ausgänge 53 der Wellenlängenmultiplexer 902 speist den aus der Überlagerung der Lichtströme der fünf definiert verschiedenen Wellenlängen I, II, III, IV und V resultierenden Lichtstrom auf eine der Glasfasern, die zu den Zeilen (1,2,.., i-1, i+1,.., n-1, n) führen. (M-1) Sender 55 des Knotens (i,j) des Netzes 10, die jeweils einen Lichtstrom zur Datenübertragung zu einem der (M-1) anderen Knoten des Netzes generieren, werden ebenfalls an die Eingänge 51 der Wellenlängen-Demultiplexer 902 des Knotens (i,j) angeschlossen. Die gesendeten Lichtströme gelangen dann ebenfalls über die Ausgänge 53 der Wellenlängendemultiplexer 902 auf die (m-1) Fasern, die von Knoten (i,j) zu den (m-1) Spalten (1, 2,.., j-1, j+1,.., m-1, m) des Netzes 10 führen.

Bei der Verknüpfung der Ausgänge 41 der Wellenlängendemultiplexer 901 mittels der Wellenleiter 903 mit den Eingängen 51 der Wellenmultiplexer 902 gemäß Fig. 9 wird eine zyklische Vertauschung zwischen den Wellenlängendemultiplexern 901 und den Wellenlängenmultiplexern 902 für jede der fünf Wellenlängen I, II, III, IV und V vorgenommen. Dadurch ergibt sich die Funktion eines "WDM-Crossconnects".

Die Verwendung dieser Struktur gemäß Fig. 9 ist für alle Knoten (1,1 bis m,n) des Netzes 10 vorgesehen und lediglich die Belegung der Eingänge 47 der Wellenlängendemultiplexer 901 und der Ausgänge 53 der Wellenlängenmultiplexer 902 ist für jeden Knoten gesondert vorzunehmen.

Stellt beispielsweise die Struktur der Fig. 9 den Knoten 712 (1,2) des Netzes 10 dar, dann heißen die Fasern an den Eingängen 47 in dieser Reihenfolge von "oben" nach "unten" (C1→C2), (C3→C2), (C4→C2), (C5→C2), (R2→R1), (R3→R1), (R4→R1), (R5→R1) und die Fasern an den Ausgängen 53 in dieser Reihenfolge von "oben" nach "unten" (R1→R2), (R1→R3), (R1→R4), (R1→R5), (C2→C1), (C2→C3), (C2→C4), (C2→C5).

Stellt beispielsweise die Struktur der Fig. 9 den Knoten 755 (5,5) des Netzes 10 dar, dann heißen die Fasern an den Eingängen 47 in dieser Reihenfolge von "oben" nach "unten" (C4→C5), (C1→C5), (C2→C5), (C3→C5), (R1→R5), (R2→R5), (R3→R5), (R4→R5) und die Fasern an den Ausgängen 53 in dieser Reihenfolge von "oben" nach "unten" (R5→R1), (R5→R2), (R5→R3), (R5→R4), (C5→C1), (C5→C2), (C5→C3), (C5→C4).

In dem allgemeinen Fall, daß das Netz 10 m Spalten und n Zeilen umfaßt, und ohne Beschränkung der Allgemeinheit m ≥ n gewählt wird, werden für jeden Knoten 2·(m-1) Wellenlängendemultiplexer 901 mit jeweils m Ausgängen 48 und 2·(m-1) Wellenlängenmultiplexer 902 mit jeweils m Eingängen 51 benötigt.

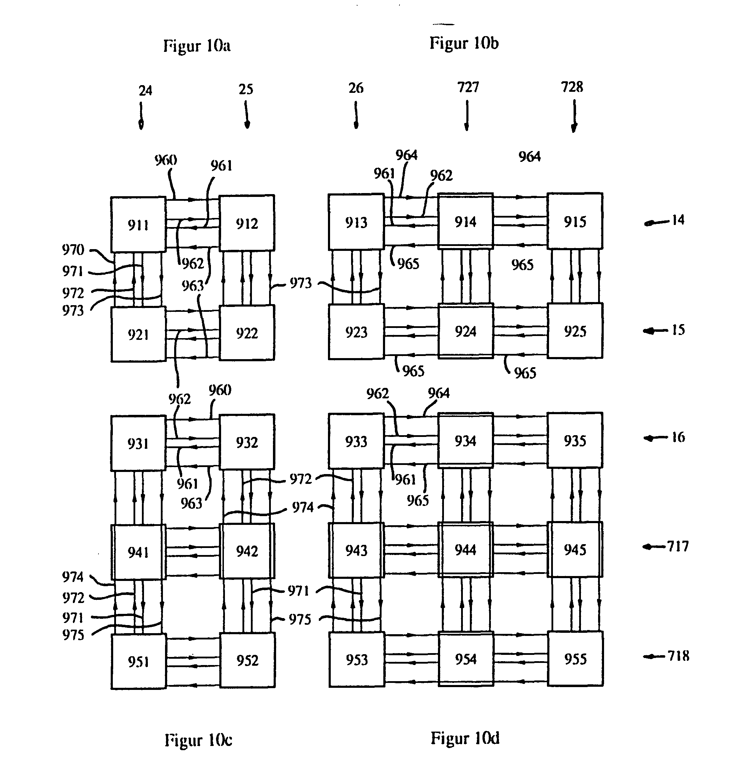

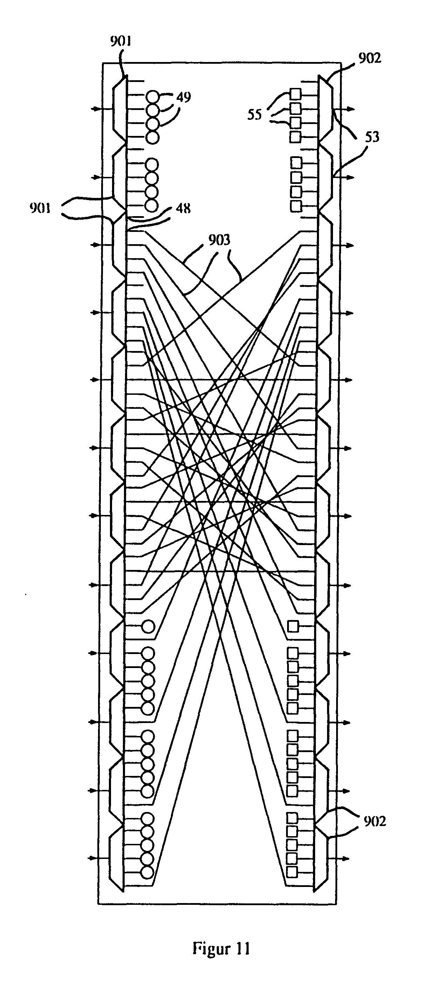

Zur Erläuterung der speziellen Erweiterung des Netzes 10, wie insoweit anhand der Figuren 6 bis 9 beschrieben, sei nun auf die Figuren 10a bis 10d und 11 verwiesen. Die in den Figuren 10a, 10b, 10c und 10d dargestellten Knoten (911-915, 921-925, 931-935, 941-945, 951-955) entsprechen den Knoten (711-715, 721-725, 731-735, 741-745, 751-755) der Fig. 7 und sind mit den Fasern 960 bis 965 und 970 bis 975 paarweise untereinander verbunden. Die Figuren 10a, 10b, 10c und 10d stellen dabei jeweils Grundsegmente dar, die es erlauben, ein im allgemeinen Fall m·n Knoten umfassendes Netz 10 gemäß Fig. 6 zu ergänzen. Im Falle, daß m und n geradzahlig sind, werden zur Ergänzung lediglich m·n / 4 Segmente gemäß Fig. 10a verwendet. Im Falle, daß m geradzahlig, n jedoch ungeradzahlig ist, werden m·(n-3) / 4 Segmente gemäß Fig. 10a und m /2 Segmente gemäß Fig. 10c verwendet. Im Falle, daß m ungeradzahlig, n jedoch geradzahlig ist, werden n·(m-3) /4 Segmente gemäß Fig. 10a und n /2 Segmente gemäß Fig. 10b verwendet. Im Falle, daß m und n ungeradzahlig sind, werden (m-3)·(n-3) /4 Segmente gemäß Fig. 10a und (n-3) /2 Segmente gemäß Fig. 10b und (m-3) / 2 Segmente gemäß Fig. 10c sowie 1 Segment gemäß Fig. 10d zur Erweiterung verwendet.

Die Erweiterung des Netzes 10 erfolgt in Form von "Kammstrukturen" die eine räumlich disjunkte Wahl eines alternativen Ausbreitungspfades zwischen zwei Knoten einer Zeile i oder einer Spalte j erlauben. Von den Knoten 911, 921, 931, 941 und 951 können beispielsweise, wie in Fig. 10a und 10c dargestellt, mittels der Fasern 960 jene Lichtströme, die im Netz 10 gemäß Fig. 7 entlang der Spalte 24 geführt wurden, gleichsam auf den "Zacken" der Kammstruktur der Spalte 25 zugeführt werden, die den "Rücken" der Kammstruktur bildet. Da aus Spalte 25 ebenfalls die Lichtströme zwischen den Knoten 912, 922, 932, 942 und 952 "umgeleitet" werden, kann die frei gewordene Übertragungskapazität für die Übertragung der Daten der Knoten der Spalte 24 untereinander entlang des "Rückens" der Kammstruktur benutzt werden. Die Fasern 963 tragen die Lichtströme "aus Spalte 24 zur Spalte 24" wiederum entlang der "Zacken" der Kammstruktur zurück zu Spalte 24. Dieselbe "Kammstruktur" wird symetrisch mittels der Fasern 961 und 962 durch eine zur "Umleitung" der Datenströme aus Spalte 25 über Spalte 24 benutzt. Die Realisierung der zur Erweiterung notwendigen "Kammstrukturen" für den Fall einer ungeraden Anzahl von Spalten zeigen die Figuren 10b und 10d, worin die Spalte 26 den "Rücken" eines Kammes darstellt, dessen "Zacken" durch die Fasern 964 und 965 gebildet sind, die mit der Spalte 728 verbunden sind. Die Spalte 727 führt die umgeleiteten Datenströme, die im Netz 10 gemäß Fig. 7 längs Spalte 26 geführt werden und mittels der Fasern 961 und 962 der Spalte 727 zugeleitet sind. Auf analoge Weise wird durch die Fasern 970 bis 975 eine Erweiterung zur "Umleitung" der Lichtströme innerhalb der Zeilen 14, 15, 16, 717 und 718 erziehlt.

Zur Erläuterung der auch für die erweiterte Konfiguration des Netzes 10 einheitlichen Struktur für sämtliche Knoten zeigt Fig. 11 die zur Fig. 9 analoge Anordnung erweitert um vier zusätzliche Wellenlängen-Demultiplexern 901 und vier zusätzlichen Wellenlängen-Multiplexer 902, an welche die Fasern 960 bis 963 und die Fasern 970 bis 973 (Knoten gemäß der Fig. 10a) oder die Fasern 961, 962, 964 und 965 und die Fasern 970 bis 973 (Knoten gemäß der Fig. 10b) oder die Fasern 960 bis 963 und die Fasern 971, 972, 974 und 975 (Knoten gemäß der Fig. 10c) oder die Fasern 961, 962, 964 und 965 und die Fasern 961, 962, 964 und 965 (Knoten gemäß der Fig. 10d) angeschlossen sind.

Ausgehend von einem Netz 10 mit maximierter Ausnutzung der durch die Glasfaserverbindungen bereitgestellten Übertragungskapazität, wie in den Figuren 6 und 7 dargestellt, kann sich ein Problem der Erweiterbarkeit dahingehend ergeben, daß keine Faser und keine Übertragungswellenlänge, mehr als Adressierungsmöglichkeit zur Verfügung steht, mit der von zusätzlichen Knoten aus, um die das Netz 10 erweitert werden soll, Knoten des Netzes 10 adressierbar wären, oder von Knoten des Netzes 10 aus die Knoten um welche das Netz 10 erweitert werden soll adressierbar wären. Dies ist insbesondere der Fall, wenn die Zahl der Spalten m und die Zahl der Zeilen n und somit auch die Zahl der benutzten definiert verschiedenen Wellenlängen identisch sind, und somit keine einzige "freie" Adresse im aufgespannten Adressraum mehr verfügbar ist.

Eine Erweiterung des Netzes ist in diesem Fall, d.h. wenn der Vorrat an unbenutzten Elementen des Adressraumes vollständig erschöpft ist, überhaupt nur dann möglich, wenn die von den Glasfaserverbindungen bereitgestellte Übertragungskapazität, ihrerseits noch nicht vollständig erschöpft ist, d.h. die bereitgestellte Übertragungsbandbreite eines oder mehrer der Signalpfade noch nicht vollständig ausgenutzt ist. Diese Nutzung der Kapazität eines der Signalpfade ist ausschließlich durch die Wahl des Übertragungsverfahrens und, bei digitalen Systemen, durch die Datenübertragungsrate bestimmt. Die Wahl der Datenübertragungsrate und des Übertragungsverfahrens kann bei den Ausführungen des Netzes 10, bei denen lediglich die benutzte Wellenlänge und die benutzte Faser zur Adressierung verwendet werden, also der Signalpfad ein sogenannter "transparenter" Wellenlängenpfad ist, "bilateral", d.h. für jedes einzelne Sender- Empfängepaar getrennt erfolgen. Eine Aufteilung der Übertragungskapazität eines solchen Wellenlängenpfades auf verschiedene Signalpfade um einen Zugriff auf das Netz von "außen" zu ermöglichen, ist nur mit einer Schnittstelle möglich, die entweder von einem Frequenz-, und / oder einem Zeit- und / oder einem Codemehrfachzugriffsverfahren Gebrauch macht und hierfür sowohl auf der Senderseite als auch bei dem Empfänger des Wellenlängenpfades vorgesehen ist. Falls das Zugriffsverfahren zur Aufteilung der Übertragungskapazität des Wellenlängenpfades im elektrischen Bereich arbeitet, sind optoelektronische E/O, O/E Wandler zum Betrieb erforderlich. Erfolgt eine Erweiterung des Netzes durch eine derartige Vergrößerung des Adressierungsraumes, so können Signalpfade aus mehreren Teilpfaden bestehen, die untereinander nur mittels der beschriebenen Schnittstellen verknüpft werden können. Für diese Signalpfade sind jedoch die Vorteile der "Transparenz" der Wellenlängenpfade , daß bei einem transparenten Pfad lediglich Sender und Empfänger zueinander passend gewählt und miteinander synchronisiert werden müssen, d.h. keine weitere der vermittelnden oder übertragenden Komponenten entlang des Pfades von der Wahl des Übertragungsverfahrens und der Datenübertragungsrate abhängig ist, nicht mehr, oder nur noch teilweise, nutzbar. Eine Erweiterung des Netzes wird daher mit Vorteil derart vorgesehen, dass die Zahl der transparenten Wellenlängenpfade von den Knoten, um die das Netz vergrößert wird, zu den Knoten des Netzes 10, entlang derer die Datenflüsse unabhängig voneinander transportiert werden können, so groß als möglich gewählt wird.

Bestenfalls fügen sich die Knoten, um die das Netz erweitert wird, vollständig in die funktionelle transparente Vollvermaschung des Netzes ein. Ein Netz 10 der insoweit erläuterten Art kann erweitert, d.h. mit einem Netz oder Teilnetz gleicher prinzipieller Struktur über transparente Signalpfade vermascht werden, indem entweder nur die Rand- oder Zugriffsknoten der Netze Anfangs- und Endpunkte der transparenten Pfade bilden oder eine gewisse "Eindring- oder Vermaschungstiefe" vorgesehen ist. Eine transparente Vermaschung zweier Netze untereinander derart, daß lediglich der Grad der Rand- oder Zugriffsknoten , d.h. die Zahl der Faserkabel die mit einem Knoten verbunden sind, von der Kopplung der Netze abhängig ist, und eine Zahl von transparenten Wellenlängenpfaden vorhanden ist, die größer ist als die Zahl der Verbindungen zwischen diesen Zugriffsknoten, hat als notwendige Bedingungen, daß der Adressierungsraum der Netze noch nicht durch die Vollvermaschung vollständig ausgenutzt ist und auch Kapazitäten zur Plazierung dieser Pfade noch verfügbar sind. Die Mächtigkeit der Adressierungsräume ist jedoch immer endlich, was eine Vollvermaschung von beliebig vielen Knoten untereinander ausschließt. Daher kann auch die Bildung von Signalpfaden aus verschieden transparenten Teilpfaden und Teilung der Übertragungskapazitäten mit einem der genannten Mehrfachzugriffsverfahren nicht prinzipiell ausgeschlossen werden.

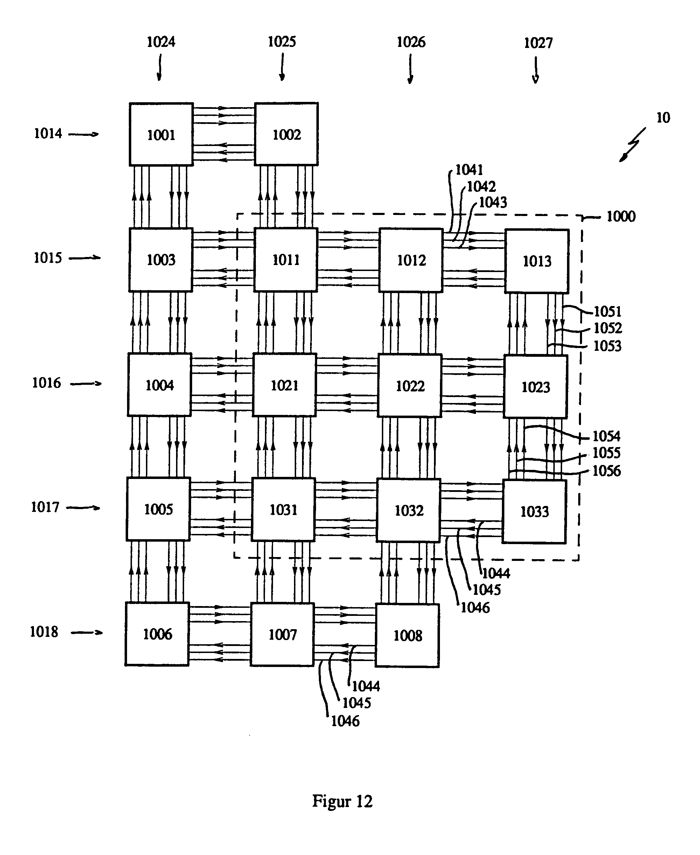

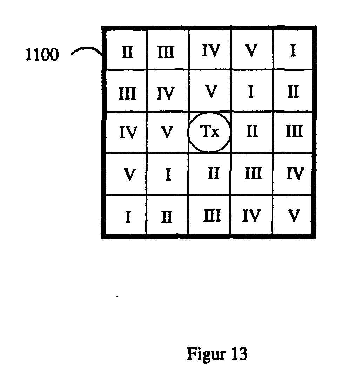

Im folgenden wird anhand der Figuren 12 und 13 ein weiteres Ausführungsbeispiel eines erfindungsgemäßen Netzes 10 erläutert, für das ohne Beschränkung der Allgemeinheit angenommen ist, daß es aus einem transparenten vollvermaschten "Kern" 1000 von 3x3 Knoten 1011 bis 1013, 1021 bis 1023 und 1031 bis 1033 und aus weiteren 8 Knoten 1001 bis 1008 besteht, um die dieser "Kern" 1000 in der dargestellten Anordnung erweitert worden ist. Sämtliche Knoten dieses Netzes sind durch jeweils sechs optische Fasern 1041 bis 1046 und 1051 bis 1056 paarweise entlang der Zeilen 1014, 1015, 1016, 1017 und 1018 und entlang der Spalten 1024, 1025, 1026 und 1027 zu einem Gitternetz verbunden. In der Figur 13 ist eine Adressiertabelle 1100 dargestellt, aus der ablesbar ist, mit welchen Wellenlängen von einem beliebigen Knoten aus diejenigen weiteren Knoten des Netzes adressierbar sind, die in jeder Richtung gesehen die nächsten oder übernächsten Nachbarknoten des betrachteten (sendenden) Knotens sind. Die Adressierung erfolgt in Analogie zu der anhand der Figur 8 erläuterten Art, wobei die Adresse in jeweils eine von fünf verschiedenen Wellenlängen I bis V sowie in die zur Übertragung des mit dieser Wellenlänge behafteten Lichtstromes ausgenutzten Faser 1041 bis 1046, codiert ist. Im Unterschied zu dem anhand der Figur 7 und 8 erläuterten Ausführungsbeispiel erfolgt jedoch die Adressierung der benachbarten Knoten von diesem sendenden Knoten aus jeweils nach einer "gleichsam festen" Adressiertabelle, die für jeden Knoten dieselbe ist.

Die Auswahl der Wellenlänge erfolgt anhand der in Figur 13 dargestellten Adressiertabelle 1100. Die Auswahl der Fasern ist sehr einfach:

Zur Adressierrung der gemäß Figur 12 "ersten rechten" Nachbarspalte, wird die Faser 1041, zur Adressierung der übernächsten rechten Nachbarspalte die Faser 1042, zur

Adressierung der ersten linken Nachbarspalte die Faser 1044 und zur Adressierung der übernächsten linken Nachbarspalte die Faser 1045 verwendet. Entlang der Spalten wird die Zuordnung der Fasern wie folgt erzielt:

Die Faser 1051 trägt die Datenströme der "ersten oberen" Nachbarzeile, die Faser 1052 diejenigen der "zweiten oberen" Nachbarzeile, die Faser 1054 diejenigen der "ersten unteren" Nachbarzeile und die Faser 1055 diejenigen der "zweiten unteren" Nachbarzeile zum betrachteten Empfangsknoten.

Von den innerhalb einer Zeile bzw. Spalte vorhandenen Fasern sind jeweils 2 Fasern, z.B. die Fasern 1043, 1046, 1053 und 1056 zum "Durchschleifen" der Datenströme vorgesehen.

In dem allgemeinen Fall, daß das Netz 10 mindestens m Spalten und n Zeilen umfaßt, die untereinander transparent voll vermascht sind, und ohne Beschränkung der Allgemeinheit m ≥ n gewählt wird, werden (2·m-1) definiert verschiedene Wellenlängen und m·(m-1) optische Fasern paarweise entlang von Zeilen und Spalten zwischen den Knoten vorgesehen. Dadurch entsteht ein Adressierungsraum, sowie ein Vorrat an unbenutzter Übertragungskapazität, die eine beliebige Erweiterung der Zahl der Knoten erlauben, die durch einer Vielzahl von transparenten Wellenlängenpfaden mit dem erweiterten Netz kommunikationsfähig sind, so daß durch die Erweiterung weitere Gebiete von maximal m x m Knoten entstehen, die untereinander voll vermascht sind.

Das in der Figur 12 dargestellte Ausführungsbeispiel umfaßt Knoten 1011-1013, 1021-1023, 1031-1033, die untereinander voll vermascht sind. Es umfaßt weiter Knoten 1001 bis 1008, die mit den untereinander vollvermaschten Knoten 1011-1013, 1021-1023, 1031-1033 durch die Fasern 1041-1046, die die Knoten 1003, 1004 und 1005 der Spalte 1024 mit den Knoten 1011, 1021 und 1031 der Spalte 1025 verbinden und durch die Fasern 1051 bis 1056 die den Knoten 1002 der Zeile 1014 mit dem Knoten 1011 der Zeile 1015 verbinden und durch die Fasern, die die Knoten 1007 und 1008 der Zeile 1018 mit den Knoten 1031 und 1032 der Zeile 1017 verbinden, transparent vermascht sind. Daraus resultieren zwei weitere "quadratische" transparent vollvermaschte Teilnetze von jeweils 3 x 3 Knoten deren eines die Knoten 1003, 1011, 1012 und 1004, 1021, 1022 und 1005, 1031 und 1032, und deren anderes die Knoten 1004, 1021, 1022 und 1005, 1031, 1032 und 1006, 1007 und 1008 umfaßt.

## Patentansprüche

1. Transportnetz mit hoher Übertragungskapazität für die Telekommunikation bei dem Knoten (1,1 bis n,m) des Netzes (10) über optische Glasfaserstrecken transparent untereinander derart verbunden sind, daß funktionell eine Vollvermaschung der Knoten (1,1 bis n,m) gegeben ist, die ein gleichzeitiges Ansprechen sämtlicher Knoten (1,1 bis n,m) durch jeden weiteren Knoten des Netzes (10) ermöglicht,
**gekennzeichnet durch** die folgenden Merkmale:
(a)die Knoten (1,1 bis n,m) sind in einer Matrix-Konfiguration in Zeilen und Spalten untereinander gekoppelt;
(b)jeder der Eckknoten (1,1; 1,m; n,1 und n,m) hat in Spaltenrichtung gesehen mindestens n Anschlüsse und in Zeilenrichtung gesehen mindestens m Anschlüsse;
(c)die in den Randzeilen angeordneten Zwischenknoten (1,2 bis 1,(m-1); n,2 bis n,(m-1)) haben in Spaltenrichtung gesehen n Anschlüsse und in Zeilenrichtung gesehen 2·m Anschlüsse, und die in den Randspalten angeordneten Zwischenknoten (2,1 bis (n-1),1 und 2,m bis (n-1),m)) haben in Zeilenrichtung gesehen m Anschlüsse und in Spaltenrichtung gesehen 2·n Anschlüsse;
(d)die Innenknoten des Netzes (10) sind mit jedem ihrer vier Nachbarn über insgesamt 2·m Anschlüssen in Zeilenrichtung gesehen und mit 2·n Anschlüssen in Spaltenrichtung gesehen verbunden;
(e)die einzelnen Knoten sind über mindestens eine Zeile und / oder eine Spalte adressierbar;
(f) ein sendender Knoten adressiert den empfangenden Knoten zum einen **durch** Aussendung der Information über eine Faser, die der Spalte des Empfängers zugeordnet ist und zum anderen **durch** eine Signalkennung, die der Zeile des empfangenden Knotens zugeordnet ist;
(g)der Empfänger erkennt die Zeile, in der sich der Sender befindet, an der optischen Faser über die ihm der Signal-Lichtstrom zugeleitet ist und die Spalte des sendenden Knotens aus der Signalkennung des empfangenen Lichtstromes;
(h)jeder Knoten hat (n·m-1) Sender (55), die mit den entsprechenden Signalkennungen betreibbar sind und (n·m-1) Empfänger (49), die auf je eine der m verschiedenen Kennungen ansprechen, die den in einer Zeile angeordneten Knoten zugeordnet sind.

2. Netz nach Anspruch 1, **dadurch gekennzeichnet, daß** jeder Knoten (n-m-1) optische Sender (55) und Empfänger (49) hat, die auf verschiedenen Wellenlängen betreibbar sind, wobei die Adressierung in die Wellenlänge kodiert ist.

3. Netz nach Anspruch 1 oder Anspruch 2, **dadurch gekennzeichnet, daß** jedem Knoten in periodischer Folge Zeitschlitze zugeordnet sind, innerhalb derer er für von den weiteren Knoten ausgesandte Signale ansprechbar ist.

4. Netz nach Anspruch 2 oder Anspruch 3, **dadurch gekennzeichnet, daß** für die Adressierung eine eindeutige Kombination von Wellenlänge und Zeitschlitz ausgenutzt wird.

5. Netz nach einem der Ansprüche 1 bis 4, **dadurch gekennzeichnet, daß** bei Ausfall eines Knotens (1,1 bis n,m) oder einer optischen Glasfaserverbindung zwischen zwei Knoten verschiedene "Umgehungspfade" geschaltet werden können.

6. Netz nach Anspruch 5, **dadurch gekennzeichnet, daß** die Ausweichpfade mittels einer elektronischen Steuereinheit derart schaltbar sind, daß die Datenströme, die den ausgefallenen Teil des Netzes zu passieren bestimmt waren, von dem jeweiligen Sendeknoten aus mit Hilfe eines Multiplexverfahrens einem Datenstrom hinzugefügt werden, der zu einem Netzknoten einer anderen Zeile geleitet wird, um dort wieder durch ein Multiplexverfahren einem weiteren Datenstrom hinzugefügt zu werden, der zum ursprüchlichen Bestimmungsknoten des umgeleiteten Datenstromes führt.

7. Netz nach einem der Ansprüche 1 bis 6, **dadurch gekennzeichnet, daß** die Knoten (1,1 bis n,m) eine vereinheitlichte integrierbare Struktur aufweisen, die in der Summe soviel Wellenlängen-Multiplexer und Wellenlängen-Demultiplexer aufweist wie optische Fasern angeschlossen sind und Wellenleiter, die nur Lichtströme jeweils einer Wellenlänge führen, die optischen Ausgänge der Wellenlängen-Demultiplexer mit den optischen Eingängen der Wellenlängen-Multiplexer verbinden.

8. Netz nach einem der Ansprüche 1 bis 7, **dadurch gekennzeichnet, daß** die Lichtströme auf den die Wellenlängen-Demultiplexer und die Wellenlängen-Multiplexer verbindenden Wellenleitern mit optischen Halbleiterverstärkern (SOA) verstärkt und in ihrer Modulations-Pulsformung regeneriert werden.

9. Netz nach einem der Ansprüche 4 bis 6, **dadurch gekennzeichnet, daß** bei der Kombination von Wellenlängen und Zeitschlitzen zur Adressierung, die Zeitschlitze lediglich zur Adressierung innerhalb einer Spalte verwendet werden und die Datenströme aus verschiedenen Spalten innerhalb eines Knotens lediglich über leistungsteilende Elemente (127) zusammngeführt werden.

10. Telekommunikationsnetz mit hoher Übertragungskapazität bei dem Knoten (1,1 bis n,m) des Netzes (10) über optische Glasfaserstrecken transparent untereinander derart verbunden sind, daß funktionell eine Vollvermaschung der Knoten (1,1 bis n,m) gegeben ist, die ein gleichzeitiges Ansprechen sämtlicher Knoten (1,1 bis n,m) durch jeden weiteren Knoten des Netzes (10) ermöglicht, wobei
(a)die Knoten (1,1 bis n,m) in einer Matrix-Anordnung in Zeilen und Spalten untereinander gekoppelt sind;
(b)jeder der Eckknoten (1,1; 1,m; n,1 und n,m) in Spaltenrichtung gesehen mindestens n Anschlüsse und in Zeilenrichtung gesehen mindestens m Anschlüsse hat;
(c)die in den Randzeilen angeordneten Zwischenknoten (1,2 bis 1,(m-1) und n,2 bis n,(m-1)) in Spaltenrichtung gesehen mindestens n Anschlüsse und in Zeilenrichtung gesehen mindestens 2·m Anschlüsse und die in den Randspalten angeordneten Zwischenknoten (2,1 bis (n-1),1 und 2,m bis (n-1),m)) in Zeilenrichtung gesehen mindestens m Anschlüsse und in Spaltenrichtung gesehen mindestens 2·n Anschlüsse haben;
(d)die Innenknoten des Netzes (10) mit jedem ihrer vier Nachbarn über insgesamt mindestens 2·m Anschlüssen in Zeilenrichtung gesehen und mit mindestens 2·n Anschlüssen in Spaltenrichtung gesehen verbunden sind;
(e)die einzelnen Knoten über mindestens eine Zeile und / oder eine Spalte adressierbar sind;
(f) ein sendender Knoten den empfangenden Knoten zum einen durch Aussendung der Information über eine Faser, die der Spalte des Empfängers zugeordnet ist und zum anderen durch eine Signalkennung, die der Zeile des empfangenden Knotens zugeordnet ist adressiert;
(g)der Empfänger die Zeile, in der sich der Sender befindet, an der optischen Faser, über die ihm der Signal-Lichtstrom zugeleitet ist und die Spalte des sendenden Knotens aus der Signalkennung des empfangenen Lichtstromes erkennt;
(h)jeder Knoten (n·m-1) Sender (55), die mit den entsprechenden Signalkennungen betreibbar sind, und (n·m-1) Empfänger (49), die auf je eine der m verschiedenen Kennungen ansprechen, die den in einer Zeile angeordneten Knoten zugeordnet sind, hat,
**gekennzeichnet durch die folgenden Merkmale:**
(i) jeder der Eckknoten (1,1; 1,m; n,1 und n,m) hat in Spaltenrichtung gesehen mindestens 2·(n-1) Anschlüsse und in Zeilenrichtung gesehen mindestens 2·(m-1) Anschlüsse;
(j) die in den Randzeilen angeordneten Zwischenknoten (1,2;..;1,j; ..;1,(m-1) und n,2;..; n,j; ..; n,(m-1) mit j = (2; 3;..; m-1)) haben in Spaltenrichtung gesehen mindestens 2·(n-1) Anschlüsse und in Zeilenrichtung gesehen mindestens 2·(m-j)·j + 2·(m-j+1)·(j-1) Anschlüsse und die in den Randspalten angeordneten Zwischenknoten (2,1;..; i,1; ..;(n-1),1 und 2,m;..;1,j; ..; (n-1),m) mit i= (2; 3;..; n-1)) haben in Zeilenrichtung gesehen mindestens 2·(m-1) Anschlüsse und in Spaltenrichtung gesehen mindestens 2·(n-i)·i + 2·(n-i+1)·(i-1) Anschlüsse;
(k)die Innenknoten (i,j mit i= (2; 3;..; n-1) und j = (2; 3;..; m-1)) des Netzes (10) sind mit jedem ihrer vier Nachbarn über insgesamt mindestens
2·(m-j)·j + 2·(m-j+1)·(j-1) Anschlüsse, in Zeilenrichtung gesehen, und mit mindestens 2·(n-i)·i + 2·(n-i+1)·(i-1) Anschlüsse, in Spaltenrichtung gesehen, verbunden.

11. Netz nach Anspruch 2 oder Anspruch 10 **dadurch gekennzeichnet, daß** die Adresse der Zeile jedes Knotens in eine von N definiert verschiedenen Wellenlängen kodiert ist und jeder Knoten unter einer von N definiert verschiedenen Wellenlängen für die Knoten einer Zeile ansprechbar ist, wobei N die größere der beiden Zahlen n und m ist.

12. Netz nach Anspruch 11 **dadurch gekennzeichnet, daß** für sämtliche Knoten (1,1 bis n,m) eine identische Struktur vorgesehen ist, an der jene Fasern angeschlossen sind, welche Lichtströme tragen, die in die Spalte des Knotens führen, und jene Fasern angeschlossen sind, die diejenigen Lichtströme tragen, die von diesem Knoten aus zu den anderen Spalten des Neztes gerichtet sind, und die anderen Fasern lediglich durchgeschleift sind.

13. Netz nach Anspruch 11 oder Anspruch 12, **dadurch gekennzeichnet, daß**, unabhängig davon, ob die Adressierung eines angesteuerten Knotens, von einem anderen Knoten des Netzes (10) aus durch primäre Auswahl der Spalte und sekundärer Auswahl der Zeile oder durch primäre Auswahl der Zeile und sekundäre Auswahl der Spalte des Zielknotens erfolgt, der Zielknoten stets durch dieselbe Wellenlänge adressierbar ist.

14. Netz nach Anspruch 13 **dadurch gekennzeichnet, daß**
(a)die Knoten der Spalten j und j+1 mit 4 zusätzlichen Fasern in Zeilenrichtung paarweise miteinander verbunden sind, wobei j = (1, 3, 5, 7, .., m-3, m-1) für geradzahliges m und j = (1, 3, 5, 7, ..,m-4, m-2, m-1) für ungeradzahliges m gilt und
(b)die Knoten der Zeilen i und i+1 mit 4 zusätzlichen Fasern paarweise in Spaltenrichtung miteinander verbunden sind, wobei i= (1, 3, 5, 7, ..,n-3, n-1) für geradzahliges m und i= (1, 3, 5, 7, ..,n-4, n-2, n-1) ungeradzahliges m gilt.

15. Netz nach Anspruch 13 oder Anspruch 14 **dadurch gekennzeichnet, daß** dem Netz in periodischer Folge Zeitschlitze zugeordnet sind, innerhalb derer das Netz alternierend auf alternative Signalpfad-Kombinationen geschaltet ist.

16. Netz nach Anspruch 13 oder Anspruch 14 **dadurch gekennzeichnet, daß** mindestens zwei Netze gleicher Funktion und vorzugsweise gleicher Übertragungskapazität, jedoch mit unterschiedlicher Führung der Signalpfade vorgesehen sind, die alternativ oder gemeinsam betreibbar sind.

17. Netz nach einem der vorhergehenden Ansprüche 1 bis 16 **dadurch gekennzeichnet, daß** insgesamt mindestens zwei weitere optische Fasern von anderen Knoten aus als denjenigen des Netzes (10) an mindestens einem Knoten des Netzes (10) anschließbar sind.

18. Netz nach Anspruch 17, das mit M definiert verschiedenen Wellenlängen betreibbar ist, **dadurch gekennzeichnet, daß** die Wellenlängenmultiplexer und Wellenlängendemultiplexer des Netzes mit mindestens M+1 definiert verschiedenen Wellenlängen betreibbar sind.

19. Netz nach Anspruch 17 oder Anspruch 18, **dadurch gekennzeichnet, daß** für sämtliche Knoten (1,1 bis n,m) jeweils in beide Spalten- und Zeilenrichtungen gesehen mindestens N·(N-1) Anschlüsse vorgesehen sind, und daß die Adresse der Zeile jedes Knotens in eine von mindestens 2·N-1 definiert verschiedenen Wellenlängen kodiert ist und jeder Knoten unter einer von mindestens 2·N-1 definiert verschiedenen Wellenlängen für die Knoten einer Zeile ansprechbar ist, wobei N die größere der beiden Zahlen n und m ist.

## Claims

1. Transport network having a high transmission capacity for telecommunications, in which nodes (1,1 to n,m) of the network (10) are transparently connected to one another via optical glass-fibre links in such a way that there is, functionally, a complete interconnection of the nodes (1,1 to n,m) that makes possible simultaneous contacting of all the nodes (1,1 to n,m) by every further node in the network (10),
**characterized by** the following features:
(a) the nodes (1,1 to n,m) are coupled to one another in rows and columns in a matrix configuration;
(b) viewed in the column direction, each of the corner nodes (1,1; 1,m; n,1 and n,m) has at least n connections and, viewed in the row direction, at least m connections;
(c) viewed in the column direction, the intermediate nodes (1,2 to 1,(m-1); n,2 to n,(m-1)) disposed in the peripheral rows have n connections and, viewed in the row direction, 2· m connections and, viewed in the row direction, the intermediate nodes (2,1 to (n-1),1 and 2,m to (n-1),m)) disposed in the peripheral columns have m connections and, viewed in the column direction, 2· n connections;
(d) viewed in the row direction, the inner nodes of the network (10) are connected to each of their four neighbours via a total of 2· m connections and, viewed in the column direction, with 2· n connections;
(e) the individual nodes can be addressed via at least one row and/or one column;
(f) a transmitting node addresses the receiving node, on the one hand, by transmitting the information via a fibre that is assigned to the column of the receiver and, on the other hand, by means of a signal identifier that is assigned to the row of the receiving node;
(g) the receiver recognizes the row in which the transmitter is situated from the optical fibre via which the signal luminous flux is fed to it and the column of the transmitting node from the signal identifier of the received luminous flux;
(h) every node has (n· m-1) transmitters (55) that can be operated with the appropriate signal identifiers and (n· m-1) receivers (49) that respond to one of the m different identifiers in each case that have been assigned to the nodes disposed in a row.

2. Network according to Claim 1, **characterized in that** every node has (n·m-1) optical transmitters (55) and receivers (49) that can be operated at various wavelengths, the addressing being encoded in the wavelength.

3. Network according to Claim 1 or Claim 2, **characterized in that** there is assigned to every node a periodic sequence of time slots within which it can be contacted for signals transmitted by the other nodes.

4. Network according to Claim 2 or Claim 3, **characterized in that** an unambiguous combination of wavelength and time slot is utilized for the addressing.

5. Network according to one of Claim 1 to 4, **characterized in that**, in the event of failure of a node (1,1 to n,m) or of an optical glass fibre connection between two nodes, various "circumvention paths" can be switched.

6. Network according to Claim 5, **characterized in that** the alternative paths can be switched by means of an electronic control unit in such a way that the data streams that were intended to pass through the failed part of the network are added from the transmitting node with the aid of a multiplex method to a data stream that is fed to a network node of another row in order to be added therein, again by a multiplex method, to a further data stream that is routed to the original destination node of the diverted data stream.

7. Network according to one of Claims 1 to 6, **characterized in that** the nodes (1,1 to n,m) have a standardized, intergratable structure that has, in total, as many wavelength-division multiplexers and wavelength-division demultiplexers as there are optical fibres connected and waveguides that conduct only luminous fluxes of one wavelength in each case and connect the optical outputs of the wavelength-division demultiplexers to the optical inputs of the wavelength-division multiplexers.

8. Network according to one of Claims 1 to 7, **characterized in that** the luminous fluxes are amplified by semiconductor optical amplifiers (SOA) on the waveguides connecting the wavelength-division demultiplexers and the wavelength-division multiplexers and their modulation pulse shaping is regenerated.

9. Network according to one of Claims 4 to 6, **characterized in that**, in the case of the combination of wavelengths and time slots for the purpose of addressing, the time slots are used only for addressing within a column and the data streams from different columns are brought together within a node only via power-sharing elements (127).

10. Telecommunications network having a high transmission capacity, in which nodes (1,1 to n,m) of the network (10) are transparently connected to one another via optical glass fibre links in such a way that there is functionally a complete interconnection of the nodes (1,1 to n,m) that makes possible a simultaneous contacting of all the nodes (1,1 to n,m) by every other node in the network (10), wherein
(a) the nodes (1,1 to n,m) are coupled to one another in rows and columns in a matrix configuration;
(b) viewed in the column direction, each of the corner nodes (1,1; 1,m; n,1 and n,m) has at least n connections and, viewed in the row direction, at least m connections;
(c) viewed in the column direction, the intermediate nodes (1,2 to 1,(m-1); n,2 to n,(m-1)) disposed in the peripheral rows have at least n connections and, viewed in the row direction, at least 2· m connections and, viewed in the row direction, the intermediate nodes (2,1 to (n-1),1 and 2,m to (n-1),m)) disposed in the peripheral columns have at least m connections and, viewed in the column direction, at least 2· n connections;
(d) viewed in the row direction, the inner nodes of the network (10) are connected to each of their four neighbours via a total of at least 2· m connections and, viewed in the column direction, with at least 2· n connections;
(e) the individual nodes can be addressed via at least one row and/or one column;
(f) a transmitting node addresses the receiving node, on the one hand, by transmitting the information via a fibre that is assigned to the column of the receiver and, on the other hand, by means of a signal identifier that is assigned to the row of the receiving node;
(g) the receiver recognizes the row in which the transmitter is situated from the optical fibre via which the signal luminous flux is fed to it and the column of the transmitting node from the signal identifiers of the received luminous flux;
(h) every node has (n· m-1) transmitters (55) that can be operated with the appropriate signal identifier and (n·m-1) receivers (49) that respond to one of the m different identifiers in each case that have been assigned to the nodes disposed in a row
**characterized by** the following features:
(i) viewed in the column direction, each of the corner nodes (1,1; 1,m; n,1 and n,m) has at least 2· n(n-1) connections and, viewed in the row direction, at least 2· (m-1) connections;
(j) viewed in the column direction, the intermediate nodes in the peripheral rows (1,2; ..; 1,j; ..; 1,(m-1) and n,2; ..; n,j; ..; n,(m-1) where j = (2; 3; ..; m-1)) have at least 2· (n-1) connections and, viewed in the row direction, at least 2 · (m-j)·j+2· (m-j+1)· (j-1) connections and the intermediate nodes (2,1; ..; i,1; ..; (n-1),1 and 2,m; ..; 1,j; ..; (n-1), m) where i = (2; 3; ..; n-1)) have, viewed in the row direction, at least 2 · (m-1) connections and, viewed in the column direction, at least 2· (n-i)· i+2· (n-i+1)· (i-1) connections;
(k) the inner nodes (i,j where i = (2; 3; ..; n-1) and j = (2; 3; ..; m-1)) of the network (10) are connected with each of their four neighbours via in total at least 2· (m-j)·j+2· (m-1+1)· (j-1) connections, viewed in the row direction, and by at least 2· (n-i)· i+2· (n-i+1)· (i-1) connections, viewed in the column direction.

11. Network according to Claim 2 or Claim 10, **characterized in that** the address of the row of every node is encoded in one of N specifically different wavelengths and each node can be contacted under one of N specifically different wavelengths for the nodes of a row, N being greater than the two numbers n and m.

12. Network according to Claim 11, **characterized in that** there is provided for all the nodes (1,1 to n,m) an identical structure to which those fibres are connected that carry luminous fluxes that are routed into the column of the node and those fibres are connected that carry those luminous fluxes that are directed from said node to the other columns of the network, and the other fibres are only looped through.

13. Network according to Claim 11 or Claim 12, **characterized in that**, regardless of whether an activated node is addressed from another node of the network (10) by primary selection of the column and secondary selection of the row or by primary selection of the row and secondary selection of the column of the target node, the target node can always be addressed by the same wavelength.

14. Network according to Claim 13, **characterized in that**
(a) the nodes of the columns j and j+1 are connected to one another in pairs by four additional fibres in the row direction, where j = (1, 3, 5, 7, .., m-3, m-1) for even values of m and j = (1, 3, 5, 7, .., m-4, m-2, m-1) for odd values of m, and
(b) the nodes of the rows i and i+1 are connected to one another in pairs in the column direction by four additional fibres, where i = (1, 3, 5, 7, .., n-3, n-1) for even values of m and i = (1, 3, 5, 7, .., n-4, n-2, n-1) for odd values of m.

15. Network according to Claim 13 or Claim 14, **characterized in that** there are assigned to the network in a periodic sequence time slots within which the network is alternately switched to alternative signal path combinations.

16. Network according to Claim 13 or Claim 14, **characterized in that** at least two networks having the same function and preferably the same transmission capacity, but different routing of the signal paths, are provided that can be operated alternatively or jointly.

17. Network according to one of the preceding Claims 1 to 16, **characterized in that** in total at least two further optical fibres can be connected from nodes other than those of the network (10) at at least one node of the network (10).

18. Network according to Claim 17 that can be operated with M specifically different wavelengths, **characterized in that** the wavelength-division multiplexers and wavelength-division demultiplexers of the network can be operated with at least M+1 specifically different wavelengths.

19. Network according to Claim 17 or Claim 18, **characterized in that** at least N (N-1) connections are provided for all the nodes (1,1 to n,m) viewed in each case in both column and row directions and **in that** the address of the row of each node is encoded in one of at least 2· N-1 specifically different wavelengths and every node can be contacted at one of at least 2· N-1 specifically different wavelengths for the nodes of a row, N being the greater of the two numbers n and m.

## Revendications

1. L'invention concerne un réseau de transport à haut pouvoir de transmission pour les télécommunications, dans lequel des noeuds (1,1 à n,m) du réseau (10) sont reliés entre eux de manière transparente par des lignes en fibre optique de telle manière qu'il en résulte une interconnexion complète des noeuds (1,1 à n,m) sur le plan fonctionnel, permettant à tout noeud du réseau (10) de s'adresser simultanément à tous les autres noeuds (1,1 à n,m),
**présentant les caractéristiques suivantes :**
(a) les noeuds (1,1 à n,m) sont interconnectés dans une configuration matricielle en lignes et colonnes ;
(b) chacun des noeuds d'angle (1,1 ;1,m ;n,1 et n,m) dispose d'au moins n connexions dans la direction des colonnes et d'au moins m connexions dans la direction des lignes ;
(c) les noeuds intermédiaires (1,2 à 1,(m-1) ; n,2 à n,(m-1)) disposés sur les lignes extérieures possèdent n connexions dans la direction des colonnes et 2.m connexions dans la direction des lignes, et les noeuds intermédiaires (2,1 à (n-1),1 et 2,m à (n-1),m) disposés sur les colonnes extérieures possèdent m connexions dans la direction des lignes et 2.n connexions dans la direction des colonnes ;
(d) les noeuds intérieurs du réseau (10) sont reliés avec chacun de leurs quatre voisins par un total de 2.m connexions dans la direction des lignes et de 2.n connexions dans la direction des colonnes ;
(e) les différents noeuds sont adressables au moins par une ligne et/ou une colonne ,
(f) un noeud émetteur adresse le noeud récepteur d'une part par l'envoi de l'information sur une fibre associée à la colonne du récepteur et d'autre part par un indicatif de signal associé à la ligne du noeud récepteur ;
(g) le récepteur identifie la ligne dans laquelle se trouve l'émetteur par la fibre optique via laquelle le signal lumineux lui parvient et la colonne du noeud émetteur par l'indicatif de signal du flux lumineux reçu ,
(h) chaque noeud dispose de (n.m-1) émetteurs (55) exploitables avec les indicatifs de signaux correspondants et (n.m-1) récepteurs (49) qui réagissent chacun à un des m indicatifs de signaux différents qui sont associés aux noeuds disposés dans une ligne.

2. Réseau selon la revendication 1, **caractérisé par le fait que** chaque noeud (n.m-1) dispose d'émetteurs (55) et de récepteurs (49) optiques qui sont exploitables sur différentes longueurs d'onde, l'adressage étant codé dans la longueur d'onde.

3. Réseau selon la revendication 1 ou la revendication 2, **caractérisé par le fait qu'**à chaque noeud est alloué périodiquement un créneau temporel pendant lequel il est réceptif aux signaux envoyés par les autres noeuds.

4. Réseau selon la revendication 2 ou la revendication 3, **caractérisé par le fait qu'**une combinaison de longueurs d'onde et de créneaux temporels est utilisée pour l'adressage.

5. Réseau selon l'une des revendications 1 à 4, **caractérisé par le fait qu'**en cas de défaillance d'un noeud (1,1 à n,m) ou d'une liaison par fibre optique entre deux noeuds, il est possible de commuter différents " chemins de dérivation".

6. Réseau selon la revendication 5, **caractérisé par le fait que** les chemins de déviation sont commutables au moyen d'un organe de commande électronique de telle manière que les flux de données qui devaient passer par la partie défaillante du réseau sont ajoutés, depuis le noeud émetteur concerné, par un procédé de multiplexage, à un flux de données envoyé à un noeud d'une autre ligne pour y être de nouveau ajouté, par un procédé de multiplexage, à un autre flux de données qui conduit au noeud de destination initial du flux de données dévié.

7. Réseau selon l'une des revendications 1 à 6, **caractérisé par le fait que** les noeuds (1,1 à n,m) présentent une structure unifiée intégrable composée d'autant de multiplexeurs et de démultiplexeurs en longueurs d'onde que sont raccordées de fibres optiques et de guides d'ondes ne conduisant des flux lumineux d'une seule longueur d'onde à chaque fois qui relient les sorties optiques des démultiplexeurs en longueur d'onde aux entrées optiques des multiplexeurs en longueur d'onde

8. Réseau selon l'une des revendications 1 à 7, **caractérisé par le fait que** les flux lumineux sont amplifiés par des amplificateurs optiques à semi-conducteurs (SOA) et régénérés dans leur conformation des impulsions de modulation sur les guides d'ondes qui relient les démultiplexeurs et les multiplexeurs en longueur d'onde.

9. Réseau selon l'une des revendications 4 à 6, **caractérisé par le fait que**, dans la combinaison de longueurs d'onde et de créneaux temporels utilisée pour l'adressage, le créneau temporel est utilisé uniquement pour l'adressage à l'intérieur d'une colonne et que les flux de données provenant de différentes colonnes ne sont réunis dans un noeud que par le biais d'éléments de répartition de la puissance (127).

10. Réseau de télécommunication à haut pouvoir de transmission dans lequel les noeuds (1,1 à n,m) du réseau (10) sont reliés entre eux de manière transparente par des lignes en fibre optique de telle manière qu'il en résulte une interconnexion complète des noeuds (1,1 à n,m) sur le plan fonctionnel, permettant à tout noeud du réseau (10) de s'adresser simultanément à tous les autres noeuds (1,1 à n,m), où :
(a) les noeuds (1,1 à n,m) sont interconnectés dans une configuration matricielle en lignes et colonnes ;
(b) chacun des noeuds d'angle (1,1 ;1,m ;n,1 et n,m) dispose d'au moins n connexions dans la direction des colonnes et d'au moins m connexions dans la direction des lignes ;
(c) les noeuds intermédiaires (1,2 à 1,(m-1) et n,2 à n,(m-1)) disposés sur les lignes extérieures possèdent au moins n connexions dans la direction des colonnes et au moins 2.m connexions dans la direction des lignes, et les noeuds intermédiaires (2,1 à (n-1),1 et 2,m à (n-1),m) disposés sur les colonnes extérieures possèdent au moins m connexions dans la direction des lignes et au moins 2.n connexions dans la direction des colonnes ;
(d) les noeuds intérieurs du réseau (10) sont reliés avec chacun de leurs quatre voisins par un total d'au moins 2.m connexions dans la direction des lignes et d'au moins 2.n connexions dans la direction des colonnes ;
(e) les différents noeuds sont adressables au moins par une ligne et/ou une colonne ;
(f) un noeud émetteur adresse le noeud récepteur d'une part par l'envoi de l'information sur une fibre associée à la colonne du récepteur et d'autre part par un indicatif de signal associé à la ligne du noeud récepteur ;
(g) le récepteur identifie la ligne dans laquelle se trouve l'émetteur par la fibre optique via laquelle le signal lumineux lui parvient et la colonne du noeud émetteur par l'indicatif de signal du flux lumineux reçu ;
(h) chaque noeud dispose de (n.m-1) émetteurs (55) exploitables avec les indicatifs de signaux correspondants et (n.m-1) récepteurs (49) qui réagissent chacun à un des m indicatifs de signaux différents qui sont associés aux noeuds disposés dans une ligne,
**présentant les caractéristiques suivantes :**
(i) chacun des noeuds d'angle (1,1 ;1,m ;n,1 et n,m) dispose d'au moins 2.(n-1) connexions dans la direction des colonnes et d'au moins 2.(m-1) connexions dans la direction des lignes ;
(j) les noeuds intermédiaires (1,2 ;.. ;1, j ;.. ;1,(m-1) et n,2 ;.. ;n,j ;.. ;n,(m-1) avec j= (2 ;3 ;.. ;m-1)) disposés sur les lignes extérieures possèdent au moins 2.(n-1) connexions dans la direction des colonnes et au moins 2.(m-j).j + 2.(m-j+1).(j-1) connexions dans la direction des lignes, et les noeuds intermédiaires (2,1 ;.. ;i,1 ;.. ;(n-1),1 et 2,m ;.. ;1,j ;.. ; (n-1),m avec i=(2 ;3 ;.. ;n-1)) disposés sur les colonnes extérieures possèdent au moins 2.(m-1) connexions dans la direction des lignes et au moins 2.(n-i).i + 2.(n-i+1).(i-1) connexions dans la direction des colonnes ;
(k) les noeuds intérieurs (i, j avec i=(2 ;3 ;.. ;n-1) et j=(2 ;3 ;.. ;m-1) du réseau (10) sont reliés avec chacun de leurs quatre voisins par au moins 2.(m-j).j + 2.(m-j+1).(j-1) connexions dans la direction des lignes et au moins 2.(n-i).i + 2.(n-i+1).(i-1) connexions dans la direction des colonnes.

11. Réseau selon la revendication 2 ou la revendication 10, **caractérisé par le fait que** l'adresse de la ligne de chaque noeud est codée dans une parmi N longueurs d'onde différentes et que la communication peut être établie avec chaque noeud sur l'une des N longueurs d'onde différentes définies pour les noeuds d'une ligne, N étant le plus grand des deux nombres n et m.

12. Réseau selon la revendication 11, **caractérisé par le fait qu'**il est prévu pour tous les noeuds (1,1 à n,m) une structure identique à laquelle sont connectées les fibres optiques transportant les flux lumineux conduisant à la colonne du noeud ainsi que les fibres optiques transportant les flux lumineux adressés aux autres colonnes du réseau à partir de ce noeud, les flux ne faisant que transiter par les autres fibres optiques.

13. Réseau selon la revendication 11 ou la revendication 12, **caractérisé par le fait qu'**indépendamment du fait que l'adressage d'un noeud à partir d'un autre noeud du réseau (10) soit effectué par sélection primaire de la colonne et sélection secondaire de la ligne ou par sélection primaire de la ligne et sélection secondaire de la colonne du noeud cible, le noeud cible est toujours adressable par la même longueur d'onde.

14. Réseau selon la revendication 13, **caractérisé par le fait que**
(a) les noeuds des colonnes j et j+1 sont reliés entre eux par paires au moyen de 4 fibres optiques supplémentaires dans la direction des lignes, avec j = (1, 3, 5, 7, ..., m-3, m-1) si m est pair et j = (1, 3, 5, 7, ..., m-4, m-2, m-1) si m est impair et que
(b) les noeuds des lignes i et i+1 sont reliés entre eux par paires au moyen de 4 fibres optiques supplémentaires dans la direction des colonnes, avec i = (1, 3, 5, 7, ..., n-3, n-1) si m est pair et i = (1, 3, 5, 7, ..., n-4, n-2, n-1) si m est impair.

15. Réseau selon la revendication 13 ou la revendication 14, **caractérisé par le fait que** des créneaux temporels sont alloués au réseau selon un cycle périodique, pendant lesquels le réseau est commuté alternativement sur des combinaisons de chemin de signal de substitution.

16. Réseau selon la revendication 13 ou la revendication 14, **caractérisé par le fait que** sont prévus au moins deux réseaux de même fonction et de préférence même pouvoir de transmission, mais avec des cheminements de signaux différents, pouvant fonctionner alternativement ou en commun.

17. Réseau selon l'une des revendications 1 à 16 précédentes, **caractérisé par le fait qu'**il est possible de connecter au moins deux autres fibres optiques à partir d'autres noeuds que ceux du réseau (10) à au moins un noeud du réseau (10)

18. Réseau selon la revendication 17, pouvant fonctionner avec M longueurs d'onde différentes définies, **caractérisé par le fait que** les multiplexeurs et démultiplexeurs en longueur d'onde du réseau peuvent être utilisés avec au moins M+1 longueurs d'onde différentes définies.

19. Réseau selon la revendication 17 ou la revendication 18, **caractérisé par le fait qu'**au moins N.(N-1) connexions sont prévues pour tous les noeuds (1,1 à n,m) dans la direction des lignes et dans celle des colonnes, et en ce que l'adresse de la ligne de chaque noeud est codée dans l'une d'au moins 2.N-1 longueurs d'onde différentes définies et la communication peut être établie avec chaque noeud sur l'une d'au moins 2.N-1 longueurs d'onde différentes définies pour les noeuds d'une ligne, N étant le plus grand des deux nombres n et m.
